# EUROPEAN PATENT APPLICATION

(11) **EP 4 650 927 A1**
(43) Date of publication of application: **19.11.2025**
(21) Application number: 24822302.6
(22) Date of filing: 12.03.2024
(51) Int. Cl.: G06F 3/0482

(54) **CROSS-DEVICE CONTENT TRANSMISSION METHOD AND APPARATUS**

(30) Priority: 16.06.2023 CN 202310731797
(71) Applicant: Honor Device Co., Ltd., Shenzhen, Guangdong 518040 (CN)
(72) Inventor: CHEN, Jiazi, Shenzhen, Guangdong 518040 (CN); LI, Juan, Shenzhen, Guangdong 518040 (CN); CHEN, Shuo, Shenzhen, Guangdong 518040 (CN)
(74) Representative: Gill Jennings & Every LLP
(86) International application number: PCT/CN2024/081149
(87) International publication number: WO 2024/255344

(57) **Abstract**

Embodiments of this application provide a cross-device content transfer method and apparatus, and relate to the field of terminal technologies, in which in a case where a first device remotely accesses a second device, in response to an operation of dragging a first icon to a first toolbar, the first device displays a third interface and receives a first element indicated by the first icon and transmitted by the second device, a first folder of the first device includes the first element after the first element is transferred, and the third interface includes content displayed by the second device, so that the first device can conveniently transfer the first element from the second device to the first device based on a user's operation of dragging the first icon to the first toolbar, simplifying the cross-device content transfer method.

## Description

This application claims priority to Chinese Patent Application No. 202310731797.1, filed with the China National Intellectual Property Administration on June 16, 2023 and entitled "CROSS-DEVICE CONTENT TRANSFER METHOD AND APPARATUS", which is incorporated herein by reference in its entirety.

### TECHNICAL FIELD

This application relates to the field of terminal technologies, and in particular, to a cross-device content transfer method and apparatus.

### BACKGROUND

With the popularization and development of the Internet, there are more and more types and quantities of terminal devices, and users have higher and higher requirements for flexible switching between devices in multi-device scenarios.

Generally, when needing to transfer a file from a first device to a second device, a user may transfer the file to a cloud application of the first device, open a same cloud application on the second device, and download the file from the cloud application, so that the file is transferred from the first device to the second device.

However, the above cross-device content transfer method is relatively cumbersome.

### SUMMARY

Embodiments of this application provide a cross-device content transfer method and apparatus, in which in a case where a first device remotely accesses a second device, the first device may conveniently transfer a first element from the second device to the first device based on a user's operation of dragging a first icon to a first toolbar, simplifying the cross-device content transfer method.

According to a first aspect, an embodiment of this application provides a cross-device content transfer method, applied to a first device, the method including: displaying, by the first device, a first interface, the first interface including content displayed by the first device; establishing, by the first device, a remote communication connection with the second device; displaying, by the first device, a second interface after establishing the remote communication connection, the second interface including content displayed by the second device and a first toolbar, the content displayed by the second device including a first icon; and displaying, by the first device in response to an operation of dragging the first icon to the first toolbar, a third interface, and receiving a first element indicated by the first icon and transmitted by the second device, the third interface including the content displayed by the second device, and a first folder of the first device including the first element after the first element is transferred. In this way, in a case where the first device remotely accesses the second device, the first device can conveniently transfer the first element from the second device to the first device based on the user's operation of dragging the first icon to the first toolbar, simplifying the cross-device content transfer method.

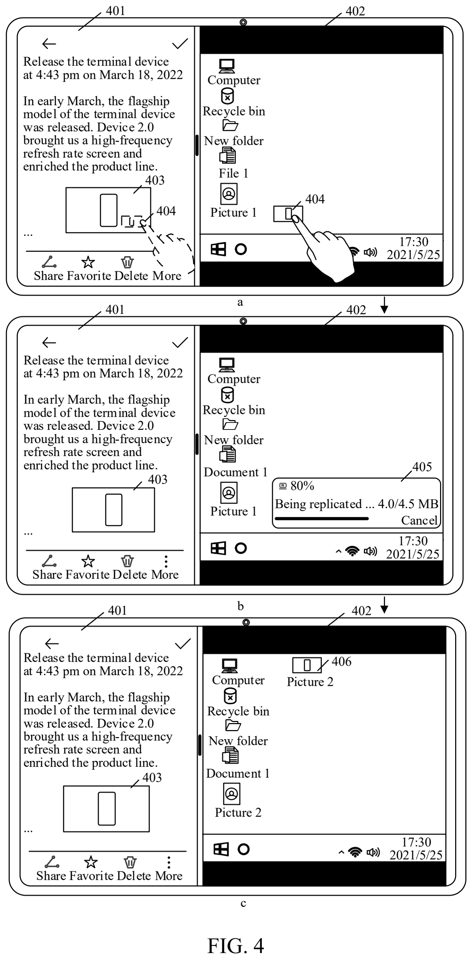

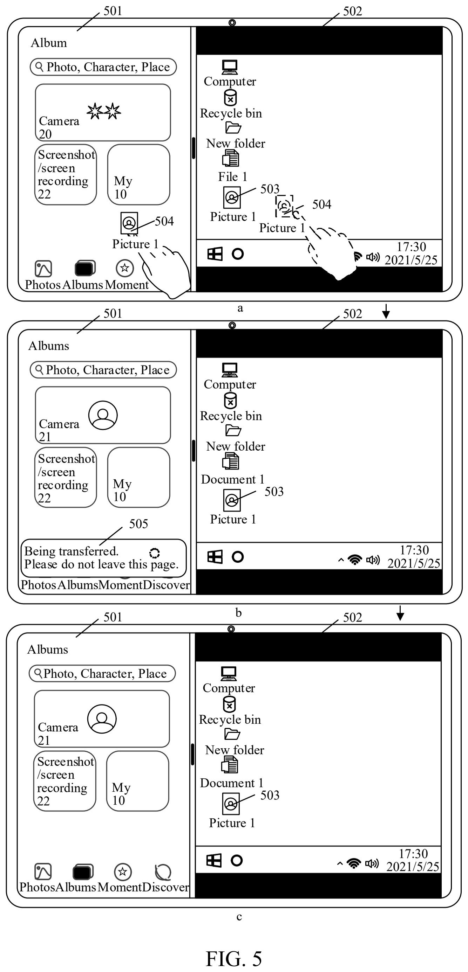

Corresponding to a scenario IV, the first interface may be an interface displayed by the first device before remotely accessing the second device. For example, content displayed in a window 401 in an interface shown in a in FIG. 4, or content displayed in a window 501 in an interface shown in a in FIG. 5, or the like may be displayed in the first interface, which is not limited in the embodiments of this application.

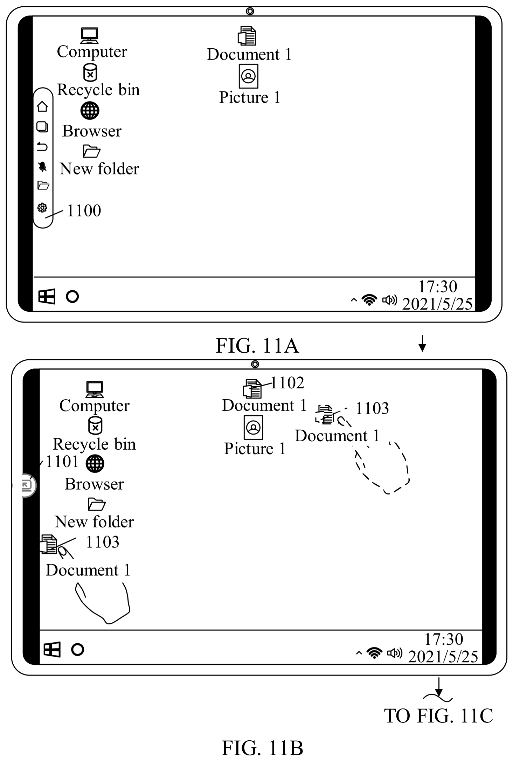

The second interface may be an interface shown in FIG. 11A, the first toolbar may be a first toolbar 1100, and the first icon may be an icon 1102 of a document 1.

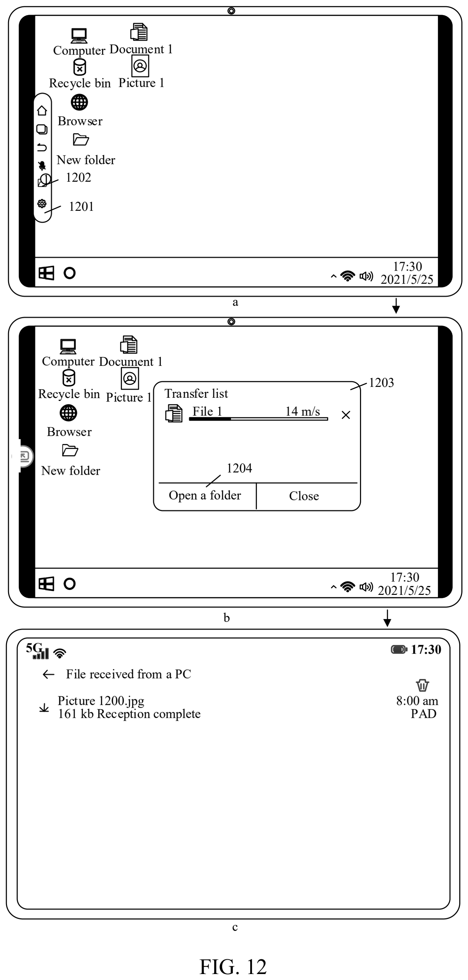

The third interface may be an interface shown in a in FIG. 12.

In a possible implementation, the displaying, by the first device in response to an operation of dragging the first icon to the first toolbar, a third interface includes: displaying, by the first device in response to the operation of dragging the first icon to the first toolbar, a fourth interface, the fourth interface including: the content displayed by the second device and a second toolbar, the second toolbar being configured to indicate a position where the first element is transferred across devices; and displaying, by the first device in response to an operation of dragging the first icon to the second toolbar, the third interface. In this way, the first device can drag the first element to the first toolbar to cause the first toolbar to expand to the second toolbar, and realize cross-device content transfer according to an indication in the second toolbar.

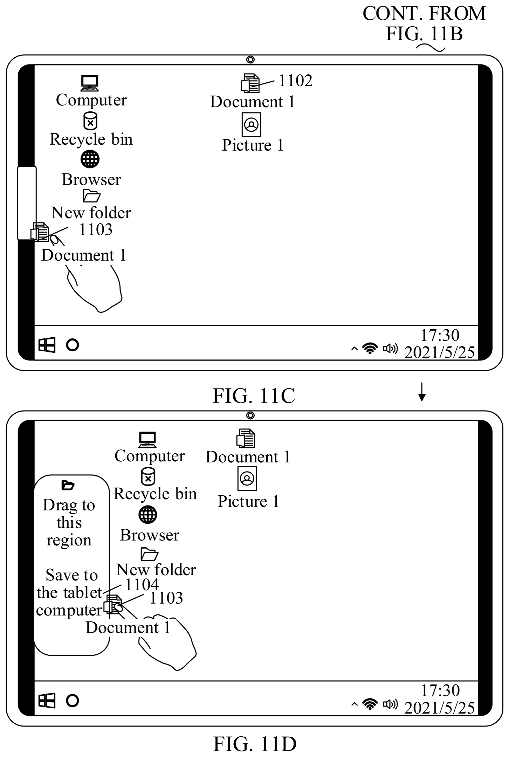

The fourth interface may be an interface shown in FIG. 11D, and the second toolbar may be a second toolbar 1104.

In a possible implementation, before the in response to a first operation of dragging the first icon to the first toolbar, the method further includes: displaying, by the first device in response to an operation on the first toolbar, a floating ball corresponding to the first toolbar; and the displaying, by the first device in response to an operation of dragging the first icon to the first toolbar, a third interface includes: displaying, by the first device in response to an operation of dragging the first icon to a first region, the third interface, the first region including the floating ball. In this way, since the first toolbar may be reduced to the floating ball, the first device can realize cross-device content transfer based on the user's operation of dragging the first icon to the first region corresponding to the floating ball, which realizes cross-device content transfer and also prevents an influence on the user's viewing of other content in the interface due to occupation of a too large area by the toolbar.

The floating ball may be a floating ball 1101 shown in FIG. 11B.

In a possible implementation, the displaying, by the first device in response to an operation of dragging the first icon to a first region, the third interface includes: displaying, by the first device in response to the operation of dragging the first icon to the first region, a fourth interface, the fourth interface including: the content displayed by the second device and a second toolbar, the second toolbar being configured to indicate a position where the first element is transferred across devices; and displaying, by the first device in response to an operation of dragging the first icon to the second toolbar, the third interface. In this way, the first device can provide a variety of scenarios for cross-device content transfer, for example, when the user drags the first icon to the first region, expand the floating ball to the second toolbar, and realize cross-device content transfer according to an indication in the second toolbar.

In a possible implementation, the third interface further includes the first toolbar, the first toolbar further includes a first button, a first identifier indicating a number of files transferred is displayed around the first button, and the method further includes: further displaying, by the first device in response to an operation on the first button, a first window in the third interface, the first window indicating that the second device is transferring the first element to the first device. In this way, the first device can conveniently view, through the first button and the first identifier, files being transferred and a number of the files being transferred.

The first button is a button 1202, the first identifier is a numerical identifier around the button 1202, and the first window is a window 1203.

In a possible implementation, the first window further includes: a second button configured to open the first folder, and the method further includes: displaying, by the first device in response to an operation on the second button, a fifth interface, the fifth interface being an interface corresponding to the first folder, the first folder including files received by the first device from the second device based on the remote communication connection. In this way, the first device can conveniently view, through the second button, the files received from the second device to confirm whether file transfer is completed.

The second button is a button 1204, and the fifth interface is an interface shown in c in FIG. 12.

In a possible implementation, the displaying, by the first device in response to an operation of dragging the first icon to the second toolbar, the third interface includes: displaying, by the first device in response to the operation of dragging the first icon to the second toolbar, the third interface when the first device determines that a type of the first element meets a preset type, the preset type including one or more of the following: a picture, a document, and a folder. In this way, the first device can initiate cross-device content transfer when detecting that a file or folder type meets a condition. In this scenario, text information cannot be transferred.

According to a second aspect, an embodiment of this application provides a cross-device content transfer method, applied to a first device, the method including: displaying, by the first device, a first interface, the first interface including content displayed by the first device; establishing, by the first device, a remote communication connection with the second device; displaying, by the first device, a second interface after establishing the remote communication connection, the second interface including content displayed by the second device, the content displayed by the second device including a second icon; displaying, by the first device in response to a split-screen operation input by a user, a sixth interface, the sixth interface including: a first window and a second window, the first window including content displayed by the first device, the second window including content displayed by the second device, the first window having no overlap with the second window; and receiving, by the first device in response to an operation of dragging the second icon from the second window to the first window, a second element indicated by the second icon and transmitted by the second device, and displaying a first prompt box in the first window, the first prompt box being configured to indicate that the second element is being transferred; the first device including the second element after the second element is transferred. In this way, split-screen display of the first window and the second window allows the first device to maximally view the content displayed in the two windows and also to realize cross-device content transfer by dragging icons, to improve the user's experience during the cross-device content transfer.

The sixth interface may be a split-screen interface, for example, any of the interfaces in FIG. 4 to FIG. 7.

In a possible implementation, after the receiving, by the first device, a second element indicated by the second icon and transmitted by the second device, the method further includes: displaying, by the first device, the second icon in the first window. In this way, the first device can also determine, through the second icon displayed in the first window, whether to implement cross-device content transfer.

The second icon may be displayed after the second element is transferred to the first device, or may be displayed during the transfer of the second element to the first device, which is not limited in the embodiments of this application.

In a possible implementation, the content displayed by the first device includes: a thumbnail corresponding to a first album, the second element includes a first image, and the receiving, by the first device in response to an operation of dragging the second icon from the second window to the first window, a second element indicated by the second icon and transmitted by the second device, and displaying a first prompt box in the first window includes: receiving, by the first device in response to an operation of dragging the second icon from the second window to the thumbnail corresponding to the first album, the first image transmitted by the second device, and displaying the first prompt box in the first window, the first album including the first image after the first image is transferred. In this way, the first device can realize cross-device content transfer in a split-screen scenario, and can also transfer the second element to an album in the first device according to a drag position of the second element, to realize album-granularity-based content transfer.

In a possible implementation, the content displayed by the first device includes: a thumbnail corresponding to at least one image, any one of the at least one image belonging to a second album, the second element includes a second image, and the receiving, by the first device in response to an operation of dragging the second icon from the second window to the first window, a second element indicated by the second icon and transmitted by the second device, and displaying a first prompt box in the first window includes: receiving, by the first device in response to the operation of dragging the second icon from the second window to the first window, the second image transmitted by the second device, and displaying the first prompt box in the first window, the second album including the second image after the second image is transferred. In this way, the first device can determine a storage position of the second image according to the content displayed in the first window. For example, when transferring the second image to an image interface corresponding to the second album, the first device may transfer the second image to the second album.

In a possible implementation, the content displayed by the first device includes: a thumbnail corresponding to a third image and a thumbnail corresponding to a fourth image, the third image and the fourth image belonging to different albums, the second element includes a fifth image, and the receiving, by the first device in response to an operation of dragging the second icon from the second window to the first window, a second element indicated by the second icon and transmitted by the second device, and displaying a first prompt box in the first window includes: receiving, by the first device in response to the operation of dragging the second icon from the second window to the first window, the fifth image transmitted by the second device, and displaying the first prompt box in the first window, a camera album of the first device including the fifth image after the fifth image is transferred. In this way, the first device can determine a storage position of the fifth image according to the content displayed in the first window. For example, when transferring the fifth image to an image interface that does not differentiate albums, the first device can transfer the fifth image to a default album, for example, the camera album.

In a possible implementation, after the fifth image is transferred, the first window further includes a second prompt box, the second prompt box being configured to indicate an album in which the fifth image is stored. In this way, the first device can also indicate a position where an image is stored, so that the user can search for the fifth image through the second prompt box.

In a possible implementation, the interface displayed by the first device further includes a third icon, and the method further includes: transmitting, by the first device in response to an operation of dragging the third icon from the first window to the second window, a third element indicated by the third icon to the second device, and displaying a third prompt box in the second window, the third prompt box being configured to indicate that the third element is being transferred, and the second device includes the third element. In this way, the first device can also transfer the content in the first device to the second device when remotely accessing the second device.

In a possible implementation, the first device includes a display screen, and a display area of the display screen is: a sum of an area occupied by the first window, an area occupied by the second window, and an area occupied by a first region, wherein the first region includes a button configured to adjust window sizes of the first window and the second window, and the first region is located between the first window and the second window. In this way, the first device can achieve remote access to the second device in a split-screen scenario, and realize cross-device content transfer while maximally viewing the first window and the second window, to improve use experience of the user and prevent inaccurate file dragging when the content in a certain window is overwritten.

According to a third aspect, a cross-device content transfer method is provided, applied to a first device, the method including: displaying, by the first device, a first interface, the first interface including content displayed by the first device; establishing, by the first device, a remote communication connection with the second device; displaying, by the first device, a second interface after establishing the remote communication connection, the second interface including content displayed by the second device, the content displayed by the second device including a second icon; displaying, by the first device in response to a user's operation of opening a first application in the first device, a seventh interface, the seventh interface including: a first window and a second window, the first window including an interface of the first application, the second window including content displayed by the second device, the first window overlaying the second window; and receiving, by the first device in response to an operation of dragging the second icon from the second window to the first window, a second element indicated by the second icon and transmitted by the second device, and displaying a first prompt box in the first window, the first prompt box being configured to indicate that the second element is being transferred, and the first device including the second element after the second element is transferred. In this way, the first window can be displayed in the form of a floating window, overlaying the second window, which maximizes the display of the content of the first device in the first window, so that the user can clearly determine a specific position of the second element transferred to the first device.

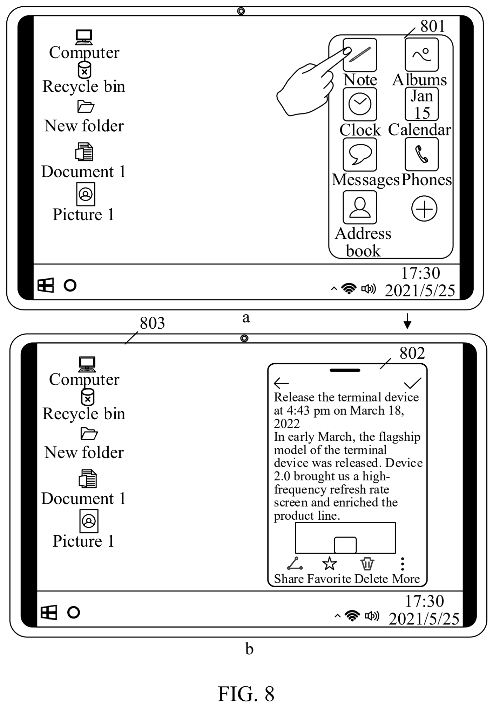

Corresponding to an embodiment corresponding to FIG. 8 in a scenario II, the seventh interface is an interface shown in b in FIG. 8.

**In** a possible implementation, after the receiving, by the first device, a second element indicated by the second icon and transmitted by the second device, the method further includes: displaying, by the first device, the second icon in the first window. In this way, the first device can also determine, through the second icon displayed in the first window, whether to implement cross-device content transfer.

**In** a possible implementation, the interface displayed by the first device further includes a third icon, and the method further includes: transmitting, by the first device in response to an operation of dragging the third icon from the first window to the second window, a third element indicated by the third icon to the second device, and displaying a third prompt box in the second window, the third prompt box being configured to indicate that the third element is being transferred, and the second device including the third element after the third element is transferred. In this way, the first device can also transfer the content in the first device to the second device when remotely accessing the second device.

**In** a possible implementation, the displaying, by the first device, a second interface includes: displaying, by the first device in response to a user's operation of sliding upward from a bottom edge of the first device, a multitasking interface, the multitasking interface including: a thumbnail corresponding to a remote control process; and displaying, by the first device in response to an operation on the thumbnail corresponding to the remote control process, the second interface. In this way, since the remote control process may be displayed in the multitasking interface in the form of a thumbnail, the user can display the second interface by triggering the thumbnail corresponding to the remote control process.

According to a fourth aspect, an embodiment of this application provides a cross-device content transfer apparatus, the method including: a display unit of a first device configured to display a first interface, the first interface including content displayed by the first device; a communication unit of the first device configured to establish a remote communication connection with the second device; the display unit of the first device being further configured to display a second interface after establishing the remote communication connection, the second interface including content displayed by the second device and a first toolbar, the content displayed by the second device including a first icon; and a processing unit of the first device configured to respond to an operation of dragging the first icon to the first toolbar, the display unit of the first device being further configured to display a third interface, and the communication unit of the first device being further configured to receive a first element indicated by the first icon and transmitted by the second device, the third interface including the content displayed by the second device, and a first folder of the first device including the first element after the first element is transferred.

In a possible implementation, the processing unit of the first device is specifically configured to respond to the operation of dragging the first icon to the first toolbar, and the display unit of the first device is specifically configured to display a fourth interface, the fourth interface including: the content displayed by the second device and a second toolbar, the second toolbar being configured to indicate a position where the first element is transferred across devices; and the processing unit of the first device is further specifically configured to respond to an operation of dragging the first icon to the second toolbar, and the display unit of the first device is further specifically configured to display the third interface.

In a possible implementation, the processing unit of the first device responds to an operation on the first toolbar, and the display unit of the first device is further configured to display a floating ball corresponding to the first toolbar; and the processing unit of the first device responds to an operation of dragging the first icon to a first region, and the display unit of the first device is further configured to display the third interface, the first region including the floating ball.

In a possible implementation, the processing unit of the first device responds to the operation of dragging the first icon to the first region, and the display unit of the first device is further configured to display a fourth interface, the fourth interface including: the content displayed by the second device and a second toolbar, the second toolbar being configured to indicate a position where the first element is transferred across devices; and the processing unit of the first device responds to an operation of dragging the first icon to the second toolbar, and the display unit of the first device is further configured to display the third interface.

In a possible implementation, the third interface further includes the first toolbar, the first toolbar further includes a first button, a first identifier indicating a number of files transferred is displayed around the first button, the processing unit of the first device responds to an operation on the first button, and the display unit of the first device is further configured to display a first window in the third interface, the first window indicating that the second device is transferring the first element to the first device.

In a possible implementation, the first window further includes: a second button configured to open the first folder, the processing unit of the first device responds to an operation on the second button, and the display unit of the first device is further configured to display a fifth interface, the fifth interface being an interface corresponding to the first folder, the first folder including files received by the first device from the second device based on the remote communication connection.

In a possible implementation, the processing unit of the first device responds to the operation of dragging the first icon to the second toolbar, and the display unit of the first device is further configured to display the third interface when the processing unit of the first device determines that a type of the first element meets a preset type, the preset type including one or more of the following: a picture, a document, and a folder.

According to a fifth aspect, an embodiment of this application provides a cross-device content transfer apparatus, a display unit of a first device configured to display a first interface, the first interface including content displayed by the first device; a communication unit of the first device configured to establish a remote communication connection with the second device; the display unit of the first device being further configured to display a second interface after establishing the remote communication connection, the second interface including content displayed by the second device, the content displayed by the second device including a second icon; the processing unit of the first device responding to a split-screen operation input by a user, and the display unit of the first device being further configured to display a sixth interface, the sixth interface including: a first window and a second window, the first window including content displayed by the first device, the second window including content displayed by the second device, the first window having no overlap with the second window; and the processing unit of the first device responding to an operation of dragging the second icon from the second window to the first window, the communication unit of the first device receiving a second element indicated by the second icon and transmitted by the second device, and the display unit of the first device being further configured to display a first prompt box in the first window, the first prompt box being configured to indicate that the second element is being transferred; the first device including the second element after the second element is transferred.

In a possible implementation, the display unit of the first device is further configured to display the second icon in the first window.

In a possible implementation, the content displayed by the first device includes: a thumbnail corresponding to a first album, the second element includes a first image, the processing unit of the first device responds to an operation of dragging the second icon from the second window to the thumbnail corresponding to the first album, the communication unit of the first device is configured to receive the first image transmitted by the second device, and the display unit of the first device is further configured to display the first prompt box in the first window, the first album including the first image after the first image is transferred.

In a possible implementation, the content displayed by the first device includes: a thumbnail corresponding to at least one image, any one of the at least one image belonging to a second album, the second element includes a second image, the processing unit of the first device responds to the operation of dragging the second icon from the second window to the first window, the communication unit of the first device is configured to receive the second image transmitted by the second device, and the display unit of the first device is further configured to display the first prompt box in the first window, the second album including the second image after the second image is transferred.

In a possible implementation, the content displayed by the first device includes: a thumbnail corresponding to a third image and a thumbnail corresponding to a fourth image, the third image and the fourth image belonging to different albums, the second element includes a fifth image, the processing unit of the first device responds to the operation of dragging the second icon from the second window to the first window, the communication unit of the first device is further configured to receive the fifth image transmitted by the second device, and the display unit of the first device is further configured to display the first prompt box in the first window, a camera album of the first device including the fifth image after the fifth image is transferred.

In a possible implementation, after the fifth image is transferred, the first window further includes a second prompt box, the second prompt box being configured to indicate an album in which the fifth image is stored.

In a possible implementation, the interface displayed by the first device further includes a third icon, the processing unit of the first device responds to an operation of dragging the third icon from the first window to the second window, the communication unit of the first device is further configured to transmit a third element indicated by the third icon to the second device, the display unit of the first device is further configured to display a third prompt box in the second window, the third prompt box being configured to indicate that the third element is being transferred, and the second device includes the third element.

In a possible implementation, the first device includes a display screen, and a display area of the display screen is: a sum of an area occupied by the first window, an area occupied by the second window, and an area occupied by a first region, wherein the first region includes a button configured to adjust window sizes of the first window and the second window, and the first region is located between the first window and the second window.

According to a sixth aspect, a cross-device content transfer apparatus is provided, a display unit of a first device configured to display a first interface, the first interface including content displayed by the first device; a communication unit of the first device configured to establish a remote communication connection with the second device; the display unit of the first device being further configured to display a second interface after establishing the remote communication connection, the second interface including content displayed by the second device, the content displayed by the second device including a second icon; and a processing unit of the first device responding to a user's operation of opening a first application in the first device, and the display unit of the first device being further configured to display a seventh interface, the seventh interface including: a first window and a second window, the first window including an interface of the first application, the second window including content displayed by the second device, the first window overlaying the second window; and the processing unit of the first device responding to an operation of dragging the second icon from the second window to the first window, the communication unit of the first device being further configured to receive a second element indicated by the second icon and transmitted by the second device, the display unit of the first device being further configured to display a first prompt box in the first window, the first prompt box being configured to indicate that the second element is being transferred, and the first device including the second element after the second element is transferred.

In a possible implementation, the display unit of the first device is further configured to display the second icon in the first window.

In a possible implementation, the interface displayed by the first device further includes a third icon, the processing unit of the first device responds to an operation of dragging the third icon from the first window to the second window, the communication unit of the first device is further configured to transmit a third element indicated by the third icon to the second device, the display unit of the first device is further configured to display a third prompt box in the second window, the third prompt box being configured to indicate that the third element is being transferred, and the second device includes the third element after the third element is transferred.

In a possible implementation, the first device displays, in response to a user's operation of sliding upward from a bottom edge of the first device, a multitasking interface, the multitasking interface including: a thumbnail corresponding to a remote control process; and the first device displays, in response to an operation on the thumbnail corresponding to the remote access control process, the second interface.

According to a seventh aspect, an embodiment of this application provides a terminal device, including: a memory, a processor, and a computer program stored in the memory and executable on the processor. The computer program, when executed by the processor, causes the terminal device to perform the method as described in any implementation of the second aspect, or the method as described in any implementation of the second aspect, or the method as described in any implementation of the third aspect.

According to an eighth aspect, an embodiment of this application provides a cross-device content transfer system, the cross-device content transfer system including a first device and a second device, the first device being configured to perform the method as described in any implementation of the second aspect, or the method as described in any implementation of the second aspect, or the method as described in any implementation of the third aspect, and the second device being configured to perform the method as described in any implementation of the second aspect, or the method as described in any implementation of the second aspect, or the method as described in any implementation of the third aspect.

According to a ninth aspect, an embodiment of this application provides a computer-readable storage medium, the computer-readable storage medium storing instructions, and the instructions, when executed, causing a computer to perform the method as described in any implementation of the second aspect, or the method as described in any implementation of the second aspect, or the method as described in any implementation of the third aspect.

According to a tenth aspect, a computer program product is provided, including a computer program, the computer program, when run, causing a computer to perform the method as described in any implementation of the second aspect, or the method as described in any implementation of the second aspect, or the method as described in any implementation of the third aspect.

It may be understood that, for effects corresponding to the fourth aspect to the tenth aspect, refer to the descriptions in the first aspect to the third aspect. Details are not described herein again.

### BRIEF DESCRIPTION OF DRAWINGS

FIG. 1 is a schematic diagram of a scenario according to an embodiment of this application;
FIG. 2 is a schematic diagram of a hardware structure of a terminal device according to an embodiment of this application;
FIG. 3 is a schematic diagram of an interface in which a first device remotely accesses a second device according to an embodiment of this application;
FIG. 4 is a schematic diagram of an interface in which a picture in a first device is transferred to a second device in a split-screen scenario according to an embodiment of this application;
FIG. 5 is a schematic diagram of an interface in which a picture in a second device is transferred to a first device in a split-screen scenario according to an embodiment of this application;
FIG. 6 is a schematic diagram of an interface in which a document in a second device is transferred to a first device in a split-screen scenario according to an embodiment of this application;
FIG. 7 is a schematic diagram of an interface in which text in a first device is transferred to a second device according to an embodiment of this application;
FIG. 8 is a schematic diagram of an interface in which a first device is displayed in the form of a floating window according to an embodiment of this application;
FIG. 9 is a schematic diagram of an interface in which a second device is displayed in the form of a floating window according to an embodiment of this application;
FIG. 10A to FIG. 10D are a schematic diagram of an interface for content transfer in a full-screen scenario according to an embodiment of this application;
FIG. 11A to FIG. 11D are a schematic diagram I of an interface for content transfer based on a toolbar according to an embodiment of this application;
FIG. 12 is a schematic diagram II of an interface for content transfer based on a toolbar according to an embodiment of this application;
FIG. 13 is a schematic diagram of a cross-content transfer apparatus according to an embodiment of this application; and
FIG. 14 is a schematic diagram of a hardware structure of another terminal device according to an embodiment of this application.

### DESCRIPTION OF EMBODIMENTS

To facilitate clear descriptions of technical solutions of embodiments of this application, the following briefly introduces some terms and technologies involved in embodiments of this application:

### 1. Remote access function

A remote access function is a function that allows one device to access an interface displayed by another device. Generally, the remote access function needs to be enabled before use. For example, a user may enable or disable the remote access function by turning on or off a preset switch in a remote control interface of a terminal device.

In different terminal devices, the remote access function may have different names, such as remote control, remote sharing, or remote access to a PC.

In a case where a first device remotely accesses a second device, the first device may transfer content such as files, folders, and/or text to the second device, and/or the first device may also transfer content such as files, folders, and/or text in the second device to the first device. In a case where the second device remotely accesses the first device, the second device may transfer content such as files, folders, and/or text to the first device, and/or the second device may also transfer content such as files, folders, and/or text in the first device to the second device. It may be understood that cross-device content transfer may be realized based on the remote access function in the embodiments of this application.

### 2. Toolbar

A toolbar is a region that assists a user in quickly using certain functions. Elements such as buttons, icons, and/or function names may be placed in the toolbar.

The toolbar may be displayed in an interface in a capsule shape, or the toolbar may be circular, semicircular, or the like and be displayed in the interface in the form of a floating ball.

The toolbar may be automatically displayed when the terminal device uses the remote access function, or the toolbar may be automatically hidden when the terminal device uses the remote access function and be called based on a user operation. For example, in a case where the first device accesses, through the remote access function, an interface displayed by the second device, the first device may display the toolbar while displaying the interface corresponding to the second device. Alternatively, the first device may display the interface corresponding to the second device. There is no toolbar in the interface, and the toolbar is displayed when the first device receives a trigger operation of the user.

To clearly describe the technical solutions in the embodiments of this application, terms such as "first" and "second" are used in the embodiments of this application to distinguish same items or similar items that provide basically same functions and effects. For example, a first value and a second value are merely used to distinguish different values, and are not intended to limit a sequence thereof. A person skilled in the art may understand that the terms, such as "first" and "second", do not limit a quantity and an execution sequence, and the terms, such as "first" and "second", do not indicate a definite difference.

It should be noted that, in this application, the word such as "exemplary" or "for example" is used to indicate giving an example, an illustration, or a description. Any embodiment or design scheme described as "exemplary" or "for example" in this application should not be explained as being more preferred or having more advantages than another embodiment or design scheme. Exactly, use of the term, such as "exemplary" or "for example", is intended to present a related concept in a specific manner.

In this application, "at least one" means one or more, and "a plurality of" means two or more. The term "and/or" describes an association relationship between associated objects and indicates that three relationships may exist. For example, A and/or B may indicate the following three cases: only A exists, both A and B exist, and only B exists, where A and B may be singular or plural. The character "/" generally indicates an "or" relationship between the associated objects. "At least one of the following items (pieces)" or similar expressions thereof indicate any combination of these items, including any combination of a singular item (piece) or plural items (pieces). For example, at least one of a, b, and c may represent: a, b, c, a and b, a and c, b and c, or a, b, and c, where a, b, and c may be singular or plural.

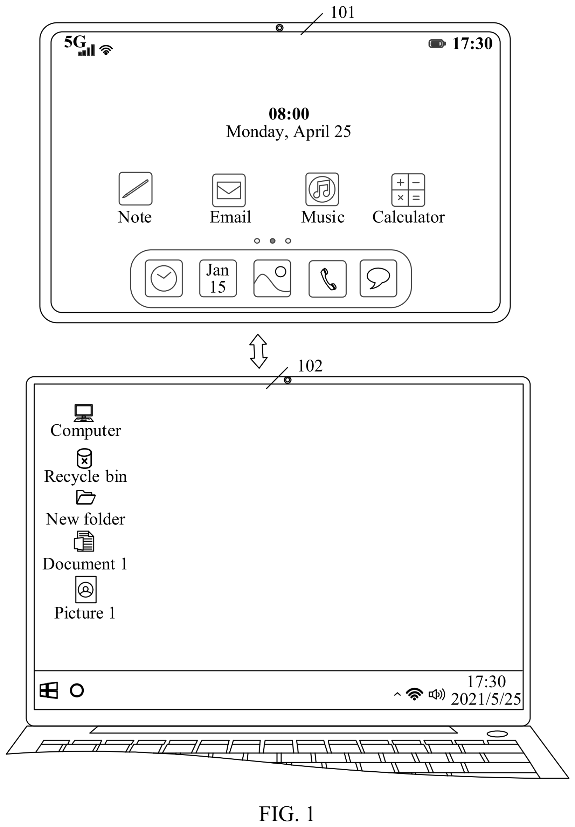

Exemplarily, FIG. 1 is a schematic diagram of a scenario according to an embodiment of this application. As shown in FIG. 1, the scenario may include: a first device and a second device. In this embodiment of this application, description is made by using an example in which the first device is a tablet computer 101 and the second device is a computer 102, and the example does not constitute a limitation on this embodiment of this application.

Generally, when the tablet computer 101 and the computer 102 cannot communicate through a data cable or a near-field manner such as Bluetooth and a user needs to transfer data in the tablet computer 101 to the computer 102 or to transfer data in the computer 102 to the tablet computer 101, the user may open a same application in the tablet computer 101 and the computer 102 respectively and log in with a same application account in the application respectively, to realize cross-device content transfer through the same application.

For example, description is made by using an example in which the application is a network disk application. When the user needs to transfer the data in the tablet computer 101 to the computer 102, the user may upload to-be-transferred data to the network disk application of the tablet computer 101 and log in to the network disk application with a same account on the computer 102. Then, the user may download the to-be-transferred data from the network disk application, to realize cross-device transfer of the data in the tablet computer 101 to the computer 102. A process in which the computer 102 transfers the data in the computer to the tablet computer 101 is similar to the above. Details are not described herein again.

However, the above cross-device content transfer method requires downloading a same application in the first device and the second device, logging in with a same account in the application, and then completing data transmission through steps such as data upload and data download. The steps are cumbersome and affect use experience of the user.

In view of this, an embodiment of this application provides a cross-device content transfer method, in which in a case where a first device remotely accesses a second device, the first device may conveniently transfer a first element from the second device to the first device based on a user's operation of dragging a first icon to a first toolbar, simplifying the cross-device content transfer method, without the need to use the first device and the second device at the same time, reducing device switching costs, and improving use experience of the user in cross-device transfer.

The first element may include: content such as a file and a folder. The file may include: a picture or a document, or the file may include content such as music and video, which is not specifically limited in the embodiments of this application.

The foregoing first device (or the second device) may be referred to as a terminal (terminal), a user equipment (user equipment, UE), a mobile station (mobile station, MS), a mobile terminal (mobile terminal, MT), or the like. For example, the terminal device may be a mobile phone (mobile phone), an intelligent television, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical care (remote medical), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in the embodiments of this application.

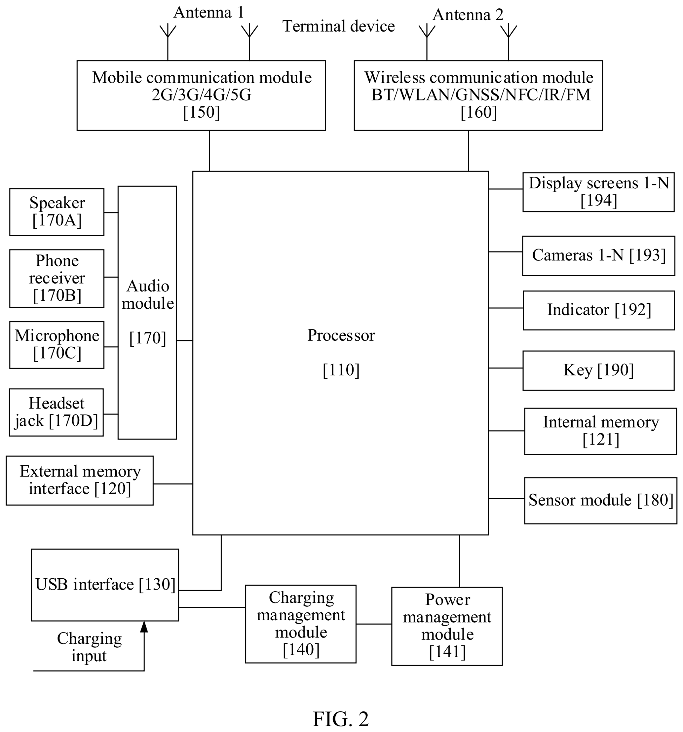

To better understand the embodiments of this application, a structure of the terminal device in the embodiments of this application is described below. Exemplarily, FIG. 2 is a schematic diagram of a hardware structure of a terminal device according to an embodiment of this application.

The terminal device described in FIG. 2 may be the first device or the second device as referred to in the embodiments of this application. A hardware structure of the first device may be the same as or different from a hardware structure of the second device, which is not specifically limited in this embodiment of this application.

As shown in FIG. 2, the terminal device may include a processor 110, an external memory interface 120, an internal memory 121, a universal serial bus (universal serial bus, USB) interface 130, a charging management module 140, a power management module 141, an antenna 2, a mobile communication module 150, a wireless communication module 160, an audio module 170, a speaker 170A, a phone receiver 170B, a microphone 170C, a headset jack 170D, a sensor module 180, a key 190, an indicator 192, a camera 193, a display screen 194, and the like.

The sensor 180 may include one or more of the following, for example, a pressure sensor, a gyro sensor, a barometric pressure sensor, a magnetic sensor, an acceleration sensor, a distance sensor, an optical proximity sensor, a fingerprint sensor, a temperature sensor, and a touch sensor, an ambient light sensor, a bone conduction sensor, and the like.

It may be understood that the structure shown in the embodiments of this application does not constitute a specific limitation on the terminal device. In some other embodiments of this application, the terminal device may include more or fewer components than those shown in the figure, or combine some components, or split some components, or have different component arrangements. The components illustrated may be implemented by hardware, software, or a combination of software and hardware.

The processor 110 may include one or more processing units. Different processing units may be separate devices, or may be integrated into one or more processors. The processor 110 may be further provided with a memory configured to store instructions and data.

The USB interface 130 is an interface compliant with a USB standard specification, and may specifically be a Mini USB interface, a Micro USB interface, a USB Type C interface, or the like. The USB interface 130 may be configured to connect to a charger to charge the terminal device, or may be configured to perform data transmission between the terminal device and a peripheral device. The USB interface may alternatively be configured to connect to a headset to play audio through the headset. The interface may alternatively be configured to connect to another device such as an AR device.

The charging management module 140 is configured to receive charging input from the charger. The charger may be a wireless charger, or may be a wired charger. The power management module 141 is configured to connect to the charging management module 140 and the processor 110.

A wireless communication function of the terminal device may be implemented by using the antenna 2, the mobile communication module 150, the wireless communication module 160, a baseband processor, and the like.

The antenna 2 may be configured to transmit and receive an electromagnetic wave signal. The antenna in the terminal device may be configured to cover a single or a plurality of communication bands. Different antennas may be further multiplexed to increase a utilization rate of the antennas.

The mobile communication module 150 may provide a solution to wireless communication including 2G/3G/4G/5G that is applied to the terminal device. The mobile communication module 150 may include at least one filter, a switch, a power amplifier, a low noise amplifier (low noise amplifier, LNA), and the like.

The wireless communication module 160 may provide a solution to wireless communication applied to the terminal device, including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), and the like.

The modem may include a modulator and a demodulator. The modulator is configured to modulate a to-be-transmitted low-frequency baseband signal into a medium or high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to an application processor. The application processor outputs a sound signal through an audio device (not limited to the speaker, the phone receiver, and the like), or displays an image or a video through the display screen 194. In some embodiments, the modem may be a separate device. In some other embodiments, the modem may be independent of the processor 110 and may be disposed in a same device as the mobile communication module 150 or another functional module.

The terminal device implements a display function by using a GPU, the display screen 194, the application processor, and the like. The GPU is a microprocessor for image processing and is connected to the display screen 194 and the application processor. The GPU is configured to perform mathematical and geometric calculation, and is configured to perform graphics rendering.

The display screen 194 is configured to display an image, a video, or the like. The display screen 194 includes a display panel. In some embodiments, the terminal device may include 1 or N display screens 194, where N is a positive integer greater than 1.

The terminal device may implement a photographing function by using an ISP, the camera 193, a video codec, the GPU, the display screen 194, the application processor, and the like.

The camera 193 is configured to capture a still image or a video. In some embodiments, the terminal device may include 1 or N cameras 193, where N is a positive integer greater than 1.

The external memory interface 120 may be configured to connect to an external storage card such as a Micro SD card, to extend a storage capability of the terminal device. The external memory card communicates with the processor 110 through the external memory interface 120 to implement a data storage function, for example, store files such as music and a video in the external storage card.

The internal storage 121 may be configured to store computer-executable program code, and the executable program code includes instructions. The internal memory 121 may include a program storage region and a data storage region.

The terminal device may implement an audio function through the audio module 170, the speaker 170A, the phone receiver 170B, the microphone 170C, the headphone interface 170D, the application processor, and the like, such as music playback, recording, and the like.

The audio module 170 is configured to convert digital audio information into an analog audio signal for output, and is also configured to convert analog audio input into a digital audio signal. The speaker 170A, also referred to as a "horn", is configured to convert an electrical audio signal into a sound signal. Music may be listened to or a hands-free call may be answered by using the speaker 170A in the terminal device. The phone receiver 170B, also referred to as an "earpiece", is configured to convert an audio electrical signal into a sound signal. When a call is answered or audio information is listened to by using the terminal device, the receiver 170B may be put close to a human ear to listen to a voice. The headset jack 170D is configured to be connected to a wired headset. The microphone 170C, also referred to as a "mic" and a "mike", is configured to convert a sound signal into an electrical signal. In the embodiments of this application, the terminal device may be provided with a microphone 170C.

The key 190 includes an on/off key, a volume key, or the like. The key 190 may be a mechanical key, or may be a touch key. The terminal device may receive a key input, and generate a key signal input related to user setting and function control of the terminal device. The indicator 192 may be an indicator light, and may be configured to indicate a charging status or a power change, and may also be configured to indicate a message, a missed call, a notification, and the like.

In addition, in the device, an operating system further runs on the foregoing components, for example, an iOS operating system, an Android (android) operating system, or a Windows operating system. An application may be installed and run in the operating system.

A software system of the terminal device may use a hierarchical architecture, an event-driven architecture, a microcore architecture, a micro service architecture, or a cloud architecture, which are not described in detail herein again.

The following describes the technical solutions of this application and how to resolve the foregoing technical problems according to the technical solutions of this application in detail by using specific embodiments. The following several specific embodiments may be independently implemented and may alternatively be combined with each other, and the same or similar concepts or processes may not be described repeatedly in some embodiments.

An embodiment of this application provides a cross-device content transfer method, so that in a case where a first device remotely accesses a second device (or the second device remotely accesses the first device), content transfer between devices can be conveniently performed based on a user's operation in one of the devices. Essence of cross-device content transfer is: in a case where the first device accesses the second device, the first device may respond to the user's operation and transfer to-be-transmitted content in the first device to the second device through a cloud device, or the second device may respond to an operation initiated by the user through a remote access function and transfer to-be-transmitted content in the second device to the first device through the cloud device.

In this embodiment of this application, description is made by using an example in which the first device is a tablet computer and the second device is a computer, and the example does not constitute a limitation on this embodiment of this application.

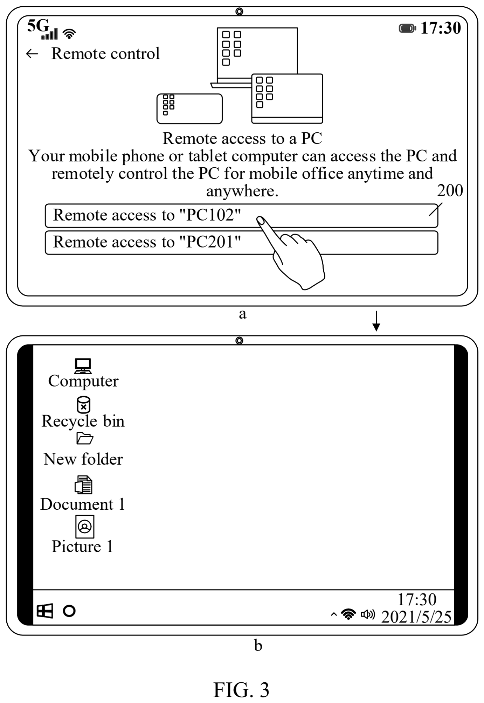

Before the cross-device content transfer, in this embodiment of this application, a process in which the first device remotely accesses the second device is illustrated with an example (see an embodiment corresponding to FIG. 3). It may be understood that a process in which the second device remotely accesses the first device may be similar to the process in which the first device remotely accesses the second device. Details are not described later.

Exemplarily, FIG. 3 is a schematic diagram of an interface in which a first device remotely accesses a second device according to an embodiment of this application.

When the first device and the second device are both logged in with a same device account and the first device and the second device are both in a network connection state, the first device and the second device may establish a connection. It may be understood that the connection established between the first device and the second device may be a connection established in a far-field scenario or a connection established in a near-field scenario, which is not limited in this embodiment of this application. For example, in the near-field scenario, a near-field connection may be achieved between the first device and the second device based on a local area network.

Before the first device remotely accesses the second device, the second device may enable a remote access permission in advance. In a case where the remote access permission is enabled, when the second device is connected to an external power source, the second device may no longer enter a sleep/hibernation mode to ensure remote access by another device at any time. In a case where the remote access permission is disabled, the second device does not support remote access from any device.

The first device displays an interface as shown in a in FIG. 3. The interface may be an enable interface corresponding to a remote control function. The interface may include at least one second device that allows establishment of remote access. For example, the second device may be a device logged in with a same device account as the first device and is in a network connection state. The interface shown in a in FIG. 3 may include: a control 200 corresponding to PC102, and PC201. The second device that allows establishment of remote access may not be limited to a PC, and may alternatively be a device such as a tablet computer or a mobile phone.

After the first device receives the user's trigger operation on the control 200, the first device displays an interface as shown in b in FIG. 3. An interface remotely accessed by the first device and corresponding to the second device may be displayed in the interface. For example, a desktop of the second device is displayed. The desktop of the second device may include: a computer icon, a recycle bin icon, a browser icon, a new folder icon, an icon of a document 1, an icon of a picture 1, and a taskbar at the bottom of the desktop. All the above icons on the desktop may be triggered. Any one of the above icons may include: a function icon and a name corresponding to the function icon. In some other embodiments, an application interface or other content may alternatively be displayed in the interface corresponding to the second device, which is not limited in this embodiment of this application.

It may be understood that the trigger operation described in this embodiment of this application may be another operation such as a click operation, a double-click operation, or a long press operation on a certain control. A specific form of the trigger operation is not limited in this embodiment of this application.

It may be understood that another interface may alternatively be included between a in FIG. 3 and b in FIG. 3. That is, the user may view an interface shown in b in FIG. 3 by triggering the control 200 in a in FIG. 3 and another control in another interface, which is not limited in this embodiment of this application.

In the interface shown in b in FIG. 3, the user may control any function in the interface. For example, the user may open any function icon on a computer desktop on the tablet computer or perform another operation on any function icon. For example, the user may perform operations such as opening, editing, deleting, and renaming the document 1, so that the user can remotely access the computer through the remote access function in the tablet computer.

Based on this, the first device may display, through the remote access function, the interface corresponding to the second device in the interface shown in b in FIG. 3, thereby achieving flexible access to the content in the second device.

In a case where the first device remotely accesses the second device, content transfer may be performed between the first device and the second device in a split-screen scenario (see an embodiment corresponding to a scenario I), content transfer may be performed between the first device and the second device in a floating window scenario (see an embodiment corresponding to a scenario II), content transfer may be performed between the first device and the second device in a full-screen scenario (see an embodiment corresponding to a scenario III), or content transfer may be performed between the first device and the second device by using a toolbar (see an embodiment corresponding to a scenario IV).

In the scenario I to the scenario III, content such as a second element (or a third element) may be transferred between the first device and the second device. In the scenario IV, the first device may transfer content such as the first element in the second device to the first device. The second element (or the third element) may include: content such as a file, a folder, and/or text. The file may include: a picture or a document, or the file may include content such as music and video. The first element may include: content such as a file or a folder. The first element may not include text.

In the scenario I, content transfer is performed between the first device and the second device in the split-screen scenario.

The split-screen scenario may be understood as that the first device may display two windows in a split-screen mode. Content corresponding to the first device may be displayed in one of the two windows, content corresponding to the second device may be displayed in the other of the two windows, and the two windows have no overlap. In the split-screen scenario, a sum of areas occupied by the two windows and a region used to adjust sizes of the two windows is a display area of the display screen.

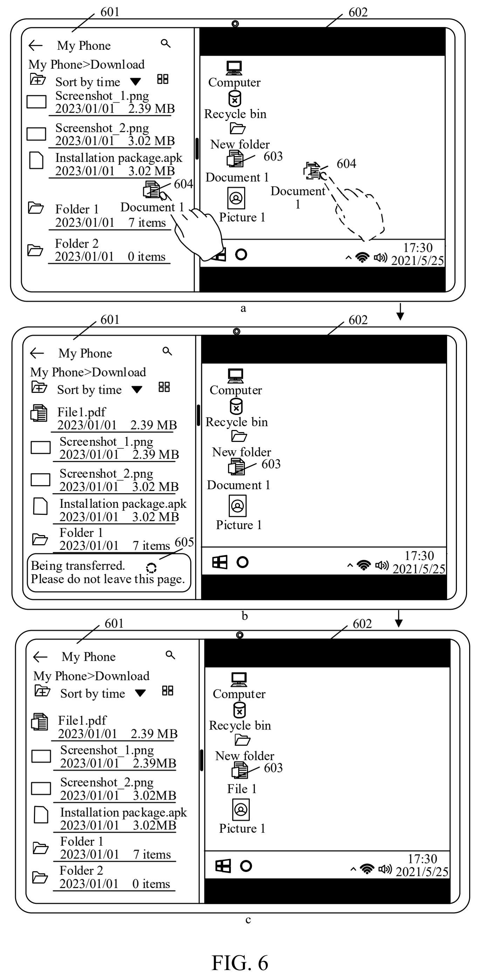

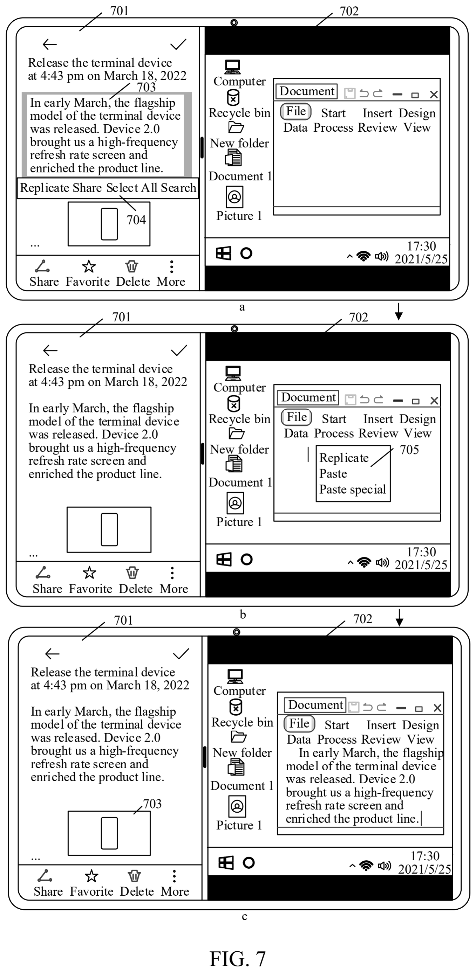

In the scenario I, picture transfer may be implemented between the first device and the second device (see embodiments corresponding to FIG. 4 to FIG. 5), document transfer may be implemented between the first device and the second device (see an embodiment corresponding to FIG. 6), and text transfer may be implemented between the first device and the second device (see an embodiment corresponding to FIG. 7).

Exemplarily, FIG. 4 is a schematic diagram of an interface in which a picture in a first device is transferred to a second device in a split-screen scenario according to an embodiment of this application.

When the first device displays the interface as shown in b in FIG. 3, the first device may display an interface as shown in a in FIG. 4 when receiving a split-screen operation of the user.

For example, the split-screen operation may include: the user swipes rightward from a left edge of the display screen (or swipes leftward from a right edge of the display screen) to bring up a sidebar, drags a note application from the sidebar, and drags the note application to a left side of the display screen, so that a split screen is displayed in the interface.

It may be understood that the first device may alternatively present a split-screen interface based on another user operation. Specific implementation of the split-screen operation is not limited in this embodiment of this application.

The note application may also be referred to as a memo application. The note application is an application used to store content such as text and pictures.

For the interface as shown in a in FIG. 4, the interface may include: a window 401 and a window 402. The window 401 is configured to display content in the note application of the first device. The window 402 is configured to display an interface remotely accessed by the first device and corresponding to the second device. The window 401 may include: titled note content published by the terminal device, a share button, a favorite button, a delete button, and a more button. The note content may include text information and a picture 403. The text information may be displayed as "In early March, the flagship model of the terminal device was released. Device 2.0 brought us a high-frequency refresh rate screen and enriched the product line."

A position relationship between the window 401 and the window 402 and sizes of the displayed windows are not limited in this embodiment of this application. The window 401 and the window 402 may include buttons configured to resize the windows.

When the first device receives the user's drag operation on the picture 403 in the window 401 (the user does not let go in this case, or it is understood that the drag operation has not ended), the first device may display an icon 404 (such as a dotted icon in the window 401) around the picture 403. The icon 404 is displayed as a reduced picture 403.

In a case where the drag operation continues to act on the icon 404, the user may drag the icon 404 from the window 401 to the window 402 (the user does not let go in this case). In this case, the first device may display the interface as shown in a in FIG. 4. In the interface, the dotted icon 404 in the window 401 is used to indicate that the picture 403 is dragged to a position in the window 402, and the icon 404 may be moved from a position of the dotted icon 404 in the window 401 to a position of a solid icon 404 in the window 402 based on the user's drag operation.

When the user drags the icon 404 from the window 401 to the window 402 and then lets go, the first device may transfer the picture 403 to the second device in response to the user's operation of letting go (or understood as that the drag operation ends in this case) and display an interface as shown in b in FIG. 4 during the transfer.

For the interface as shown in b in FIG. 4, the interface may be an interface displayed during data transfer. The window 402 of the interface may include a prompt box 405. The prompt box 405 is configured to prompt that the second device is receiving data (for example, the foregoing picture 403). For example, the prompt box 405 may include one or more of the following: text information used to indicate that data is being replicated, prompt information used to prompt a size of the data (e.g., displayed as 4.5 MB), prompt information used to prompt a size of the replicated data (e.g., displayed as 4), a cancel control, a progress bar used to indicate a transfer process, or a percentage used to indicate a transfer progress (e.g., displayed as 80%), and the like, which is not specifically limited in this embodiment of this application.

It may be understood that the icon 404 may alternatively be displayed in the window 402 in the interface shown in b in FIG. 4, and an identifier indicating that the data is being transferred may be displayed around the icon 404 to indicate that the picture 403 corresponding to the icon 404 is being transferred and the transfer has not yet been completed, which is not limited in this embodiment of this application.

It may be understood that in response to the user's operation of dragging the icon 404 from the window 401 to the window 402 and letting go, the first device may transfer the picture 403 to the second device through the cloud device.

The first device may replicate the picture 403 to the second device based on a complete drag operation of the user, or may replicate the picture 403 to the second device based on a plurality of operations. For example, the first device may receive the user's trigger operation such as a long-press operation or a double-click operation on the picture 403 in the window 401, and in response to any trigger operation on the picture 403, the first device may display the icon 404 around the picture 403. Further, when the first device receives the user's drag operation of dragging the icon 404 from the window 401 to the window 402 (the user lets go in this case), or when the first device receives the user's operation of double-clicking the desktop in the window 402 (the user lets go in this case), the first device may replicate the picture 403 to the second device. In this case, the first device may display the interface as shown in b in FIG. 4.

In some embodiments, when the user drags the icon 404 in the window 401 and ends the drag operation before dragging the icon 404 to the window 402, the first device may cancel the display of the icon 404. In this case, since the icon 404 has not been dragged into the window 402, the picture 403 cannot be transferred across devices.

After the data transfer is completed, the first device displays an interface as shown in c in FIG. 4. An icon 406 of a picture 2 may be displayed in the window 402 of the interface. Picture content indicated in the icon 406 is consistent with the picture 403 in the window 401. Therefore, the user's operation of dragging the picture from the window of the first device to the window where the second device is located may be understood as a file replication operation.

In some embodiments, an interface such as a gallery application, an email application, or a folder of the first device may alternatively be displayed in the window 401, so that the first device can also transfer, based on the user's drag operation, pictures displayed in different applications of the window 401 to the second device corresponding to the window 402, which is not limited in this embodiment of this application.

Additionally/alternatively, any application, any folder, or any compressed package of the second device may be displayed in the window 402, so that the first device can also transfer a picture in the first device to the any application, folder, or compressed package of the second device based on the user's drag operation, which is not limited in this embodiment of this application.

For example, when the first device receives that the user drags the icon 404 to a new folder or another folder in the window 402, it may be understood that the drag operation ends at the new folder or another folder. Therefore, the first device may replicate the picture 403 to the new folder. Alternatively, when any folder in the second device is open, the first device may replicate the picture 403 to the any open folder in response to the user's operation of dragging the icon 404 to the any open folder (the user lets go in this case).

It may be understood that in response to the position where the user's drag operation ends, the first device may replicate a file to a folder or a desktop where the drag operation ends, which is not limited in this embodiment of this application.

In some embodiments, the first device may transfer, by dragging, content such as a file or a folder in the window 401 to the second device corresponding to the window 402 in the split-screen scenario based on the embodiment corresponding to FIG. 4. A specific process is not described in detail herein again.

It may be understood that when the first device remotely accesses the second device, the first device may flexibly transfer the picture in the first device to the second device based on the user's drag operation, realizing cross-device content transfer.

Similarly, when the first device remotely accesses the second device, the first device may alternatively replicate a picture in the second device to the first device based on the user's drag operation.

Exemplarily, FIG. 5 is a schematic diagram of an interface in which a picture in a second device is transferred to a first device in a split-screen scenario according to an embodiment of this application.

The first device displays an interface as shown in a in FIG. 5. The interface may include: a window 501 and a window 502. The window 501 is configured to display content in the gallery application of the first device. The window 502 is configured to display an interface remotely accessed by the first device and corresponding to the second device.

The window 501 may include: a camera album including 20 photos, a screenshot/screen recording album including 22 photos, my album including 10 photos, and the like. The camera album may include photos with two six-pointed stars. Content displayed in the gallery application is not specifically limited in this embodiment of this application.

The gallery application is an application used to store photos. In some devices, the gallery application may also be referred to as an album application, a photo application, or the like, which is not limited in this embodiment of this application. Content included in the window 502 may be similar to the content included in the window 402 in FIG. 4, which is not described in detail herein again.

When the first device receives the user's drag operation on an icon 503 of the picture 1 in the window 502 (the user does not let go in this case), the first device may display an icon 504 (such as a dotted icon in the window 502) around the icon 503. The icon 504 has same display content as the icon 503.

In a case where the drag operation continues to act on the icon 504, when the first device receives the user's drag operation of dragging the icon 504 from the window 502 to the window 501 (the user does not let go in this case), the terminal device may display the interface as shown in a in FIG. 5. In the interface, the dotted icon 504 in the window 502 is used to indicate a position where the icon 503 is dragged, and the icon 504 may be moved from a position of the dotted icon 504 in the window 502 to a position of a solid icon 504 in the window 501 based on the user's drag operation.

When the user drags the icon 504 to the window 502 and then lets go, the first device may transfer the picture 1 in the second device to the first device through the cloud device in response to the user's operation of letting go (or understood as that the drag operation ends in this case), and display an interface as shown in b in FIG. 5 during the transfer.

For the interface as shown in b in FIG. 5, the window 501 of the interface may include a prompt box 505. The prompt box 505 is configured to prompt that the first device is receiving data. For example, prompt information used to prompt "Transfer is in progress; please do not leave this page" may be displayed in the prompt box 505. The window 501 may also include the picture 1. For example, the camera album may display same content as the icon 503 of the picture 1, and a number of photos included in the camera album is 21.

In a possible implementation, the picture 1 may not be displayed in the window 501 in the interface as shown in b in FIG. 5. It may be understood that the transfer of the picture 1 has not been completed in this case.

After the data transfer is completed, the first device displays an interface as shown in c in FIG. 5. The gallery application in the window 501 of the interface may include the transferred picture 1.

It may be understood that in response to the user dragging the picture 1 to a blank position in an album interface in the window 501 (where the icon 504 as shown in a in FIG. 5 is located), the first device may store the picture 1 in a default album, such as the camera album.

In some embodiments, the first device may alternatively replicate the picture 1 to a user-specified album according to a position where the drag operation ends. For example, when the first device receives that the user drags the picture 1 from the window 502 to a position of my album in the window 501 and lets go, the first device may receive the picture 1 transmitted by the second device, and then the first device may display the prompt box 505 and store the picture 1 in my album. In this scenario, 11 images including the picture 1 (not shown in the interface shown in b in FIG. 5) may be displayed in my album of the first device.

In some embodiments, a first image interface may alternatively be displayed in the window 501 (not shown in the embodiment corresponding to FIG. 5). That is, a thumbnail corresponding to at least one image or a certain image may be displayed in the first image interface of the window 501. When the thumbnail corresponding to the at least one image includes thumbnails corresponding to a plurality of images, the plurality of images may belong to a plurality of albums. In a case where the first image interface is displayed in the window 501, when the first device receives the user's drag operation of dragging the picture 1 from the window 502 to the first image interface in the window 501 (the user lets go in this case), the first device may receive the picture 1 transmitted by the second device and store the picture 1, and a prompt box configured to prompt a storage position of the picture 1 is displayed in the first image interface. The prompt box may be displayed as that the picture 1 is stored in the camera album, to facilitate the user to search for the picture 1 in the album. It may be understood that the camera album may be a default album when the first device receives images.

Alternatively, the first device may store images in different albums of the first device according to identifiers of the images. For example, when an image carries a screenshot identifier, the image may be stored in a screenshot/screen recording album, or when an image carries an identifier of a social application, the first device may store the image in an album corresponding to the social application, or when an image carries no identifier, the image may be stored in the default camera album.

In some embodiments, a second image interface corresponding to a certain album may also be displayed in the window 501. That is, images displayed in the second image interface are all in a same album. In a case where the images displayed in the second image interface all belong to my album, when the first device receives the user's drag operation of dragging the picture 1 from the window 502 to the second image interface in the window 501 (the user lets go in this case), the first device may store the picture 1 in my album.

It may be understood that through the remote access function, the first device and the second device may realize cross-device transfer and may also directly transfer data across devices to a specified application or a specified interface, to enrich usage scenarios of the remote access function.

In some embodiments, an interface corresponding to a document application, a folder, or another application in the first device may alternatively be displayed in the window 501, so that the first device can transfer the picture in the second device to any application of the first device based on the user's drag operation, which is not limited in this embodiment of this application.

Additionally/alternatively, any application, any folder, or any compressed package of the second device may be displayed in the window 502, so that the first device can also transfer, based on the user's drag operation, a picture displayed in any application of the second device, a picture displayed in any folder of the second device, or a picture displayed in any compressed package of the second device to the first device, which is not limited in this embodiment of this application.

In some embodiments, the first device may transfer, by dragging, content such as a file or a folder in the window 402 to the first device corresponding to the window 401 in the split-screen scenario based on the embodiment corresponding to FIG. 5. A specific process is not described in detail herein again.

It may be understood that when the first device remotely accesses the second device, the first device may flexibly transfer the picture in the second device to the first device based on the user's drag operation, realizing cross-device content transfer.

Exemplarily, FIG. 6 is a schematic diagram of an interface in which a document in a second device is transferred to a first device in a split-screen scenario according to an embodiment of this application.

In a case where the first device remotely accesses the second device, the first device may alternatively replicate a file in the second device to the first device based on the user's drag operation.

The first device displays an interface as shown in a in FIG. 6. The interface may include: a window 601 and a window 602. The window 601 is configured to display content in the folder of the first device, for example, content in a download folder in My Phone of the first device. The window 602 is configured to display an interface remotely accessed by the first device and corresponding to the second device.

The window 601 may include a file list. The file list includes at least one file (or folder) downloaded by the first device, such as screenshot_1.png, screenshot_2.png, installation package.apk, a folder 1, a folder 2, and the like.

When the first device receives the user's drag operation on an icon 603 of the document 1 in the window 602 (the user does not let go in this case), the first device may display an icon 604 (such as a dotted icon in the window 602) around the icon 603. The icon 604 has same display content as the icon 603.

In a case where the drag operation continues to act on the icon 604, when the first device receives the user's drag operation of dragging the icon 604 from the window 602 to the window 601 (the user does not let go in this case), the terminal device may display the interface as shown in a in FIG. 6. In the interface, the dotted icon 604 in the window 602 is used to indicate a position where the icon 603 is dragged, and the icon 604 may be moved from a position of the dotted icon 604 in the window 602 to a position of a solid icon 604 in the window 601 based on the user's drag operation.

When the user drags the icon 604 to the window 602 and then lets go, the first device may transfer the document 1 in the second device to the first device through the cloud device in response to the user's operation of letting go (or understood as that the drag operation ends in this case), and display an interface as shown in b in FIG. 6 during the transfer.

For the interface as shown in b in FIG. 6, the window 601 of the interface may include a prompt box 605. The prompt box 605 is configured to prompt that the first device is receiving data. Content displayed in the prompt box 605 may be the same as the content displayed in the prompt box 505 in the embodiment corresponding to FIG. 5, which is not described in detail herein again. The window 601 may further include: the document 1. For example, the document 1 with a file size of 2.39 MB transferred on May 25, 2023 may be displayed above screenshot_1.png.

After the data transfer is completed, the first device displays an interface as shown in c in FIG. 6. The folder in the window 601 of the interface may include the document 1.

In some embodiments, an interface corresponding to another folder or another application interface in the first device may alternatively be displayed in the window 601, so that the first device can transfer the file (or the folder) in the second device to the first device based on the user's drag operation, which is not limited in this embodiment of this application.

Additionally/alternatively, any application, any folder, or any compressed package of the second device may be displayed in the window 602, so that the first device can also transfer a file in any application of the second device, a file in any folder of the second device, or a file in any compressed package of the second device to the first device based on the user's drag operation, which is not limited in this embodiment of this application.

It may be understood that when the first device remotely accesses the second device, the first device may flexibly transfer the file in the second device to the first device based on the user's drag operation, realizing cross-device content transfer.

In some embodiments, the first device may alternatively transfer content such as video and audio in the second device to the first device based on the embodiment corresponding to FIG. 6. A specific transfer process is similar to the description of the transfer of the document described in FIG. 6, which is not described in detail herein again.

In some embodiments, in the interface shown in a in FIG. 6, the first device may alternatively transfer any file (or folder) in the window 601 to the interface of the second device based on the user's drag operation. In this case, a prompt box configured to prompt that the second device is receiving data may be displayed in the window 602 corresponding to the second device, to realize cross-device content transfer. The prompt box displayed on the second device may be similar to the prompt box 405 in FIG. 4, which is not described in detail herein.

Exemplarily, FIG. 7 is a schematic diagram of an interface in which text in a first device is transferred to a second device according to an embodiment of this application.

In a case where the first device remotely accesses the second device, the first device may alternatively replicate the text in the first device to the second device based on the user's replicate and paste operations.

The first device displays an interface as shown in a in FIG. 7. The interface may include: a window 701 and a window 702. The window 701 is configured to display content in the note application of the first device. The window 702 is configured to display an interface remotely accessed by the first device and corresponding to the second device.

The content displayed in the window 701 may be the same as the content displayed in the window 401 in FIG. 4. The window 702 may include: content displayed by a document application, for example, function buttons such as an input box, a file button, a start button, an insert button, a design button, a data button, a process button, a review button, and a view button.

In the interface as shown in a in FIG. 7, when the first device receives the user's trigger operation on text information 703, the first device may display a prompt box 704 around the text information 703. The prompt box 704 may include at least one function button, such as a replicate button, a share button, a select all button, and a search button. For example, when the first device receives the user's trigger operation on the replicate button, the first device may replicate the text information 703 and temporarily store the replicated content. The trigger operation on the text information 703 may be a long-press operation or a double-click operation on the text information 703.

When the first device receives the user's trigger operation on the input box in the document application in the window 702, the first device may display an interface as shown in b in FIG. 7. A prompt box 704 may be displayed in the document application in the interface. The prompt box 704 may include: a replicate button, a paste button, a paste special button, and the like.

The input box is configured to input text or textual information, and when the user triggers the input box, an insertion cursor may be displayed in the input box. The insertion cursor is used to indicate a position of information input. The user's trigger operation on the input box in the document application in the window 702 may be the user's single-finger click operation, single-finger double-click operation, or multi-finger click operation on the input box in the document application, and the trigger operation on the input box in the document application in the window 702 is equivalent to a right-click operation on a mouse. The mouse is connected to the second device.

When the first device receives the user's trigger operation on the paste button in the prompt box 705, the first device may display an interface as shown in c in FIG. 7. Same content as the text information 703 may be displayed in the document application in the window 702 in the interface.

**In** some embodiments, another application interface including text information may alternatively be displayed in the window 701, so that the first device can transfer the text information in another application of the first device to the second device based on the user's replicate operation, which is not limited in this embodiment of this application.

Additionally/alternatively, any interface including an input box may alternatively be displayed in the window 702, so that the first device can transfer the text information in the first device to any input box of the second device based on the user's replicate operation, which is not limited in this embodiment of this application.

It may be understood that in a case where the first device remotely accesses the second device, the first device may flexibly transfer the text information in the first device to the second device based on the user's replicate operation, realizing cross-device content transfer.

**In** some embodiments, in the interface shown in a in FIG. 7, the first device may alternatively transfer the text information in the window 702 to any application of the first device based on the user's replicate and paste operations, to realize cross-device content transfer. A specific transfer process is similar to the description in the embodiment corresponding to FIG. 7, which is not described in detail herein.

**In** some embodiments, the first device may alternatively realize cross-device transfer of the text information based on the user's operation of dragging the text information. For example, in the interface as shown in a in FIG. 7, when the first device receives the user's drag operation of selecting the text information 703 and dragging the text information 703 from the window 701 to the input box in the window 702 (the user lets go in this case), the first device may display an interface as shown in c in FIG. 7. Similarly, the first device may alternatively replicate the text information in the second device to the first device by dragging, which is not limited in this embodiment of this application.

**In** the scenario II, content transfer is performed between the first device and the second device in the floating window scenario.

The floating window scenario may be understood as that the first device may display a window and a floating window that overlays the window. Content corresponding to the first device and displayed in full screen may be included in the window, and content corresponding to the second device may be displayed in the floating window. Alternatively, Content corresponding to the second device and displayed in full screen may be included in the window, and content corresponding to the first device may be displayed in the floating window.

**In** the scenario II, content such as a file (or a folder) and text may be transferred between the first device and the second device. The file may include: a picture, a document, and the like.

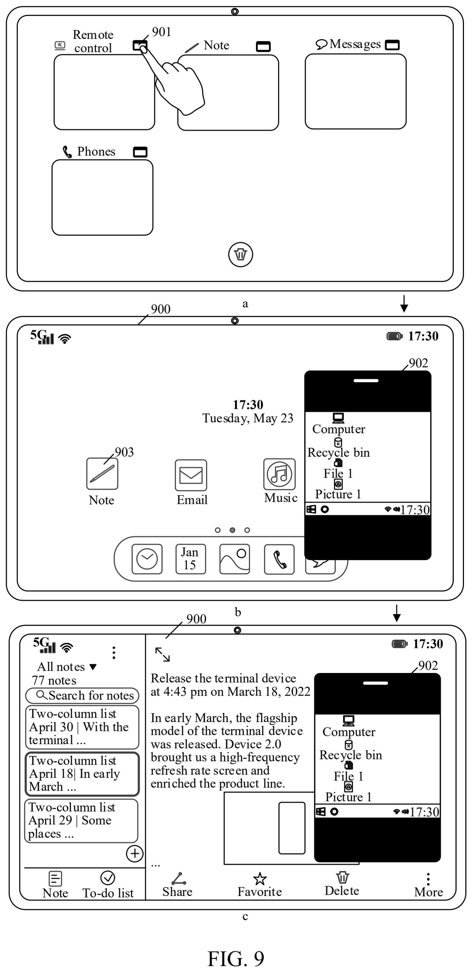

**In** a case where the first device remotely accesses the second device, the interface displayed by the first device may include: an interface corresponding to the first device and displayed in the form of a floating window, and an interface corresponding to the second device and displayed in full screen (see an embodiment corresponding to FIG. 8). Alternatively, the interface displayed by the first device may include: an interface corresponding to the second device and displayed in the form of a floating window, and an interface corresponding to the first device and displayed in full screen (see an embodiment corresponding to FIG. 9).

Exemplarily, FIG. 8 is a schematic diagram of an interface in which a first device is displayed in the form of a floating window according to an embodiment of this application.

**In** a case where the first device displays the interface as shown in b in FIG. 3, when the first device receives the user's operation of sliding leftward along the right edge of the display screen, the first device may display an interface as shown in a in FIG. 8. The interface may include: an interface corresponding to the second device and displayed in full screen, and a sidebar 801 overlaying the interface corresponding to the second device. The sidebar 801 may include at least one application button, such as a note application button, an album application button, a clock application button, a calendar application button, an information application button, a phone application button, an address book application button, and a button configured to add an application to the sidebar.

When the first device receives the user's trigger operation on the note application button in the sidebar 801, the first device may display an interface as shown in b in FIG. 8. The interface may include: an interface corresponding to the second device and displayed in full screen, for example, content displayed in a window 803, and a floating window 802 overlaying the window 803. Content in a note application of the first device may be displayed in the floating window 802.

On the basis that the first device displays the interface as shown in b in FIG. 8, the first device may replicate a picture in the floating window 802 to the desktop of the second device based on the user's drag operation. In this case, a prompt box may be displayed in the window 803. Content in the prompt box may be similar to that in the prompt box 405, which is not described in detail herein again.

Alternatively, the first device may alternatively replicate the picture 1 in the interface of the second device to the floating window 802 based on the user's drag operation. In this case, a prompt box may be displayed in the window 802. Content in the prompt box may be similar to that in the prompt box 505, which is not described in detail herein again.

It may be understood that specific implementation of cross-device transfer of content such as the picture 1 or the text information by a drag operation in the scenario II may be obtained with reference to the description corresponding to the scenario I, which is not described in detail herein again.

**In** some embodiments, another application interface of the first device may alternatively be displayed in the floating window 802, and another interface may alternatively be displayed in the window 803, so that the first device can transfer the content in the floating window 802 to the second device or transfer the content in the second device to the first device corresponding to the floating window 802 based on the user's operation, which is not limited in this embodiment of this application.

**In** some embodiments, the textual information may alternatively be transferred between the first device and the second device based on the user's replicate and paste operations.

Exemplarily, FIG. 9 is a schematic diagram of an interface in which a second device is displayed in the form of a floating window according to an embodiment of this application.

In a case where the first device displays the interface as shown in b in FIG. 3, when the first device receives that the user slides from bottom to top along a lower edge of the display screen, the first device may display an interface as shown in a in FIG. 9. The interface may be a background multitasking interface. The interface may include a thumbnail of at least one application or process running in the background. For example, the interface may include: a thumbnail of a remote control process, a thumbnail of a note application, a thumbnail of an information application, a thumbnail of a phone application, and the like. A button 901 configured for floating-window display may be displayed around or on the thumbnail of the remote control process.

The remote control process may be a process that is run when the first device accesses the second device based on the remote access function.

When the first device receives the user's trigger operation on the button 901, the first device may display an interface as shown in b in FIG. 9. The interface may include: a window 900, and a floating window 902. A desktop of the first device may be displayed in the window 900, and the floating window 902 overlays the window 900. Content corresponding to the remote control process may be displayed in the floating window 902. For example, the interface corresponding to the second device is displayed. Time information, a note application button 903, and the like may be displayed in the window 900.

When the first device receives the user's trigger operation on the button 903, the first device may display an interface as shown in c in FIG. 9. The interface may include: content in the note application displayed in the window 900, and the floating window 902.

On the basis that the first device displays the interface as shown in c in FIG. 9, the first device may replicate the picture 1 in the floating window 902 to the note application of the first device based on the user's drag operation. In this case, a prompt box may be displayed in the window 900. Content in the prompt box may be similar to that in the prompt box 505, which is not described in detail herein again.

Alternatively, the first device may alternatively replicate a picture in the note application to the floating window 902 based on the user's drag operation. In this case, a prompt box may be displayed in the window 802. Content in the prompt box may be similar to that in the prompt box 405, which is not described in detail herein again.

**In** some embodiments, another interface of the second device may alternatively be displayed in the floating window 902, and another application interface other than the note application may alternatively be displayed in the window 900, to realize cross-device transfer of content, which is not limited in this embodiment of this application.

Referring to the embodiments corresponding to FIG. 8 and FIG. 9, in a case where the first device remotely accesses the second device, regardless of whether the content in the first device is displayed in the form of a floating window or the content on the second device is displayed in the form of a floating window, content transfer between the devices is not affected.

For example, when the content in the first device is transferred to the second device, a prompt box prompting that the second device is receiving data may be displayed in the window where the second device is located, or when the content in the second device is transferred to the first device, a prompt box prompting that the first device is receiving data may be displayed in the window where the first device is located, to prompt the user to transfer data between different devices.

**In** the scenario III, content transfer is performed between the first device and the second device in the full-screen scenario.

The full-screen scenario may be understood as that the first device may display the interface corresponding to the first device in full screen or may display the interface corresponding to the second device in full screen, and the first device may realize cross-device content transfer by switching between the interface corresponding to the first device and the interface corresponding to the second device.

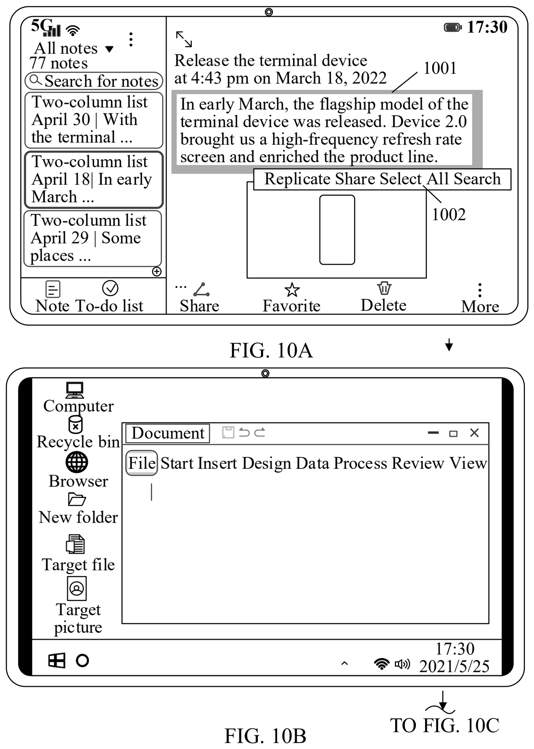

**In** the scenario III, picture transfer may be implemented between the first device and the second device, document transfer may be implemented between the first device and the second device, and text transfer may be implemented between the first device and the second device (see an embodiment corresponding to FIG. 10A to FIG. 10D).

Exemplarily, FIG. 10A to FIG. 10D are a schematic diagram of an interface for content transfer in a full-screen scenario according to an embodiment of this application.

The first device may display the interface as shown in a in FIG. 9. When the first device receives the user's click operation on the note application, the first device may display an interface as shown in FIG. 10A. The interface shown in FIG. 10A may include: the note application displayed in full screen in the first device. The note application may include: text information 1001.

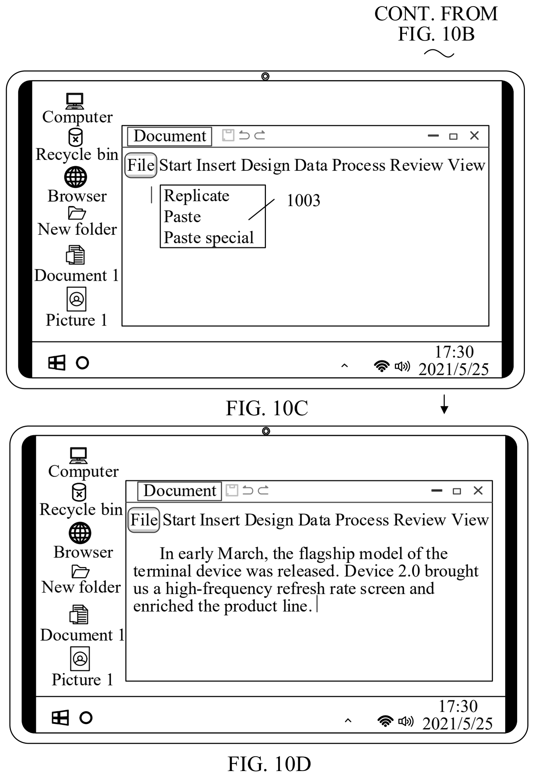

It may be understood that while the first device displays the interface as shown in a in FIG. 10, the remote control process may run in the background and support being called at any time.

When the first device receives the user's trigger operation on the text information 1001, the first device may display a prompt box 1002 around the text information 1001. The prompt box 1002 may include at least one function button, such as a replicate button, a share button, a select all button, and a search button. For example, when the first device receives the user's trigger operation on the replicate button, the first device may replicate the text information 1001 and temporarily store the replicated content.

In the interface as shown in FIG. 10A, when the first device receives the user's sliding operation from bottom to top along a bottom end of the display screen, the first device may display the background multitasking interface as shown in a in FIG. 9 again, and display an interface as shown in FIG. 10B when receiving the user's click operation on the thumbnail of the remote control process. It may be understood that in a case where the second device opens the document application in the interface in advance, the first device may display the interface as shown in FIG. 10B. The interface may include: content displayed by the document application in the second device.

When the first device receives the user's click operation on an input box in the document application, the first device may display an interface as shown in FIG. 10C. A prompt box 1003 may be displayed in the document application in the interface. The prompt box 1003 may include: a replicate button, a paste button, a paste special button, and the like. When the first device receives the user's click operation on the paste button, the first device may display an interface as shown in FIG. 10D. Same content as the text information 1001 may be displayed in the document application in the interface.

It may be understood that the first device may sequentially display the interface corresponding to the first device and the interface corresponding to the second device from the background multitasking interface based on a user operation, and realize transfer of text information between devices through interface switching. In the scenario III, the user is provided with more ways to realize cross-device content transfer and improves sense of use of the user.

In some embodiments, the first device may alternatively replicate the text information in the second device to any application of the first device based on the embodiment corresponding to FIG. 10A to FIG. 10D. A specific process is similar to that in FIG. 10A to FIG. 10D above, which is not described in detail herein again.

In some embodiments, the first device may alternatively replicate the file (or the folder) in the second device to the first device based on the embodiment corresponding to FIG. 10A to FIG. 10D by replication and pasting. A specific process is similar to that in FIG. 10A to FIG. 10D above, which is not described in detail herein again.

In the scenario IV, content transfer is performed between the first device and the second device by using the toolbar.

In the scenario IV, description is made by using an example in which the first device remotely accesses the second device and the first element in the second device is transferred to the first device by using the toolbar (see embodiments corresponding to FIG. 11A to FIG. 11D to FIG. 12).

Exemplarily, FIG. 11A to FIG. 11D are a schematic diagram I of an interface for content transfer based on a toolbar according to an embodiment of this application.

In a case where the first device remotely accesses the second device, the first device may display an interface as shown in FIG. 11A. The interface may include a first toolbar 1100. The first toolbar 1100 may include at least one function button. The function buttons in the first toolbar 1100 are sequentially as follows from top to bottom: a button configured to view the desktop, a multitasking button (equivalent to WIN+TAB in a computer), a recall button, a mute button, a button configured to view a file being transferred, and a settings button. Specific content displayed in the first toolbar is not limited in this embodiment of this application.

When the first device receives the user's operation of dragging the first toolbar 1100 to a left edge of the display screen (the user lets go at in this case), the first device may display an interface as shown in FIG. 11B. The interface may include a floating ball 1101. The floating ball 1101 may be semicircular and/or translucent, and the floating ball 1101 may be in a collapsed state corresponding to the toolbar. The floating ball 1101 may alternatively be replaced with other collapsed states, which is not limited in this embodiment of this application.

The interface shown in FIG. 11B may further include: an icon 1102 of the document 1. When the first device receives the user's drag operation on the icon 1102 (the user does not let go in this case), the first device may display an icon 1103 (such as a dotted icon in FIG. 11B) around the icon 1102. The icon 1103 has same display content as the icon 1102.

In some embodiments, in the interface as shown in FIG. 11B, when the first device receives the user's click operation on the floating ball 1101, the first device may expand the floating ball 1101 to the first toolbar 1100 and display the interface as shown in FIG. 11A.

In a case where the drag operation continues to act on the icon 1103, when the first device receives the user's operation of dragging the icon 1103 to a position close to the floating ball 1101 (the user does not let go in this case), the first device may switch to an interface as shown in FIG. 11D after displaying an interface as shown in FIG. 11C. The position close to the floating ball 1101 may be: any position in a region including the floating ball 1101.

When the first device switches from the interface as shown in FIG. 11B to the interface as shown in FIG. 11C and then switches to the interface as shown in FIG. 11D, the floating ball 1101 may gradually expand from a state as shown in FIG. 11B to a rounded rectangle (or rectangle) as shown in FIG. 11C and then expand to a capsule-shaped second toolbar 1104 as shown in FIG. 11D. The rounded rectangle shown in FIG. 11C is only an example of a state during the expansion of the floating ball. In some embodiments, the floating ball may alternatively present other forms during the expansion, which is not limited in this embodiment of this application.

For the interface as shown in FIG. 11D, the interface may include the second toolbar 1104 located at an edge of the display screen, the second toolbar 1104 is configured to indicate a position of file transfer, and prompt information used to prompt a drag position may be displayed in the second toolbar 1104. The prompt information may be displayed as "Drag to this region and save to the tablet computer."

When the first device receives the user's operation of dragging the icon 1103 to the position close to the floating ball 1101 (the user does not let go in this case), the first device may recognize content dragged by the user, and when recognizing that the dragged content is content such as a file or a folder, expand the floating ball 1101 and display the second toolbar 1104.

In some embodiments, when the first device recognizes that the dragged content is content such as text information, the first device may not expand the floating ball 1101. It may be understood that the text information cannot be transferred across devices through the second toolbar 1104.

In a possible implementation, the first device may alternatively transfer the file in the second device to the first device based on the user's operation of dragging the file to the first toolbar 1100 (the user lets go in this case). In the interface as shown in FIG. 11A, when the first device receives that the user drags the document 1 to the position of the first toolbar 1100 (the user lets go in this case), the first device may receive the file transmitted by the second device and transfer the file to a preset folder.

In another implementation, in the interface as shown in FIG. 11A, when the first device receives that the user drags the document 1 to the position of the first toolbar 1100 (the user lets go in this case), the first device may expand the first toolbar 1100 and display the interface as shown in FIG. 11D. Then, when the first device detects that the user drags the document 1 to the second toolbar 1104 and lets go, the first device may receive the file transmitted by the second device and transfer the file to the preset folder.

In another implementation, when the first device receives that the user drags the document 1 to the position of the first toolbar 1100 (the user lets go in this case) and the first device recognizes that the dragged content is a file, a folder, or the like, the first device may expand the first toolbar 1100 and display the interface as shown in FIG. 11D.

Exemplarily, FIG. 12 is a schematic diagram II of an interface for content transfer based on a toolbar according to an embodiment of this application.

In the interface as shown in FIG. 11D, in a case where the drag operation continues to act on the icon 1103, when the first device receives that the user drags the icon 1103 to a position of the second toolbar 1104 and ends the drag operation, the first device may display an interface as shown in a in FIG. 12.

For the interface as shown in a in FIG. 12, the interface may include: a first toolbar 1201. The first toolbar 1201 may include at least one function button, for example, a button 1202 configured to view files being transferred. An identifier used to indicate a quantity of the files being transferred may be displayed around the button 1202. When 1 is displayed around the button 1202, it may be understood that the first device is receiving a file (or a folder).

In the interface as shown in a in FIG. 12, when the first device receives the user's trigger operation on the button 1202, the first device may display an interface as shown in b in FIG. 12. The interface may include a prompt window 1203. The prompt window 1203 is configured to display a file list. The file list may include files being transferred. For example, the prompt window 1203 may include the document 1 being transferred. The prompt window 1203 may further include: a button 1204 configured to open a folder, and a button configured to close the prompt window.

In the interface as shown in b in FIG. 12, a floating ball displayed on the left edge of the display screen may be in a collapsed state corresponding to the first toolbar 1201, and the floating ball may be displayed in a semicircular shape and/or in a translucent shape. For example, when the tablet computer receives the user's operation of dragging the first toolbar 1201 and sliding leftward in the interface as shown in a in FIG. 12, the first toolbar 1201 may gradually shrink with a finger landing point of the user as a center until it shrinks into a floating ball, and becomes semicircular and/or translucent when moving to the edge of the display screen. Certainly, in the interface as shown in b in FIG. 12, the first toolbar 1201 may not be collapsed.

The button configured to open a folder is configured to view a file received by the first device from the second device. For example, when the first device receives the user's trigger operation on the button 1204, the first device may display an interface as shown in c in FIG. 12. The interface may include: a file received by the first device from the second device, for example, a picture 1200.jpg. A file size of the picture 1200.jpg is 161 KB and receiving time is 8: 00 am. A button configured to delete a file may also be displayed around the picture 1200.jpg.

After the file 1 is transferred, the file 1 and transfer information corresponding to the file 1 may also be displayed in the interface shown in c in FIG. 12.

Based on this, the first device may realize cross-device file transfer by using a toolbar based on the embodiment corresponding to FIG. 11A to FIG. 11D, and may view a file being transferred or view a file that has been received by the first device based on the embodiment corresponding to FIG. 12, to improve flexibility of cross-device content transfer.

An embodiment of this application further provides a cross-device content transfer system. The cross-device content transfer system includes a first device and a second device. The first device and the second device are configured to implement the steps described above.

It should be noted that, the user information (including, but not limited to, user equipment information, user personal information, and the like) and data (including, but not limited to, data for analysis, stored data, displayed data, and the like) involved in this application all are information and data authorized by the user or fully authorized by each party. The collection, use, and processing of relevant data need to comply with relevant laws and regulations, and corresponding operation portals are provided for the user to choose to authorize or refuse.

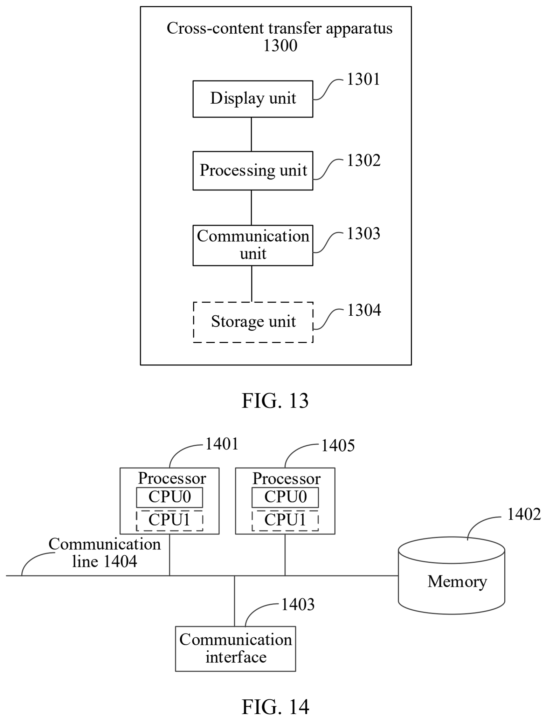

The method provided in the embodiments of this application is described above with reference to FIG. 4 to FIG. 12, and an apparatus provided in the embodiments of this application and performing the foregoing method is described below. As shown in FIG. 13, FIG. 13 is a schematic structural diagram of a cross-device content transfer apparatus according to an embodiment of this application. The cross-device content transfer apparatus may be the first device or the second device in the embodiments of this application, or may be a chip or a chip system in the first device or a chip or a chip system in the second device.

As shown in FIG. 13, a cross-device content transfer apparatus 1300 may be used in a communication device, a circuit, a hardware component, or a chip. The cross-device content transfer apparatus 1300 includes: a display unit 1301, a processing unit 1302, a communication unit 1303, and the like. The display unit 1301 is configured to support a display step performed by the cross-device content transfer method. The processing unit 1302 is configured to support the cross-device content transfer apparatus 1300 to perform a step of information processing. The communication unit 1303 is configured to support the cross-device content transfer apparatus 1300 to perform a step of receiving or transmitting a message.

The cross-device content transfer apparatus of the first device (or the second device) described in the embodiments of this application may include the units described in the embodiment corresponding to FIG. 13.

Specifically, the processing unit 1302 may be integrated with the display unit 1301, and communication may occur between the processing unit 1302 and the display unit 1301.

In a possible implementation, the cross-device content transfer apparatus 1300 may further include: a storage unit 1304. The storage unit 1304 may include one or more memories, and the memory may be a device in one or more devices or circuits that is configured to store a program or data.

The storage unit 1304 may exist independently, and is connected to the processing unit 1302 through a communication bus. The storage unit 1304 may alternatively be integrated with the processing unit 1302.

The cross-device content transfer apparatus 1300 may be a chip or a chip system of the terminal device in the embodiments of this application. The storage unit 1304 may store computer-executable instructions of the method of the terminal device, so that the processing unit 1302 performs the method of the terminal device in the foregoing embodiments. The storage unit 1304 may be a register, a cache, a random access memory (random access memory, RAM), or the like, and the storage unit 1304 may be integrated with the processing unit 1302. The storage unit 1304 may be a read-only memory (read-only memory, ROM) or another type of static storage device that may store static information and instructions, and the storage unit 1304 may be independent of the processing unit 1302.

In a possible implementation, the cross-device content transfer apparatus 1300 may further include: a communication unit 1303. The communication unit 1303 is configured to support interaction of the cross-device content transfer apparatus 1300 with another device. Exemplarily, when the cross-device content transfer apparatus 1300 is a terminal device, the communication unit 1303 may be a communication interface or an interface circuit. When the cross-device content transfer apparatus 1300 is a chip or a chip system in the terminal device, the communication unit 1303 may be a communication interface. For example, the communication interface may be an input/output interface, a pin, a circuit, or the like.

The apparatus in this embodiment may be correspondingly configured to perform the steps performed in the foregoing method embodiments. Implementation principles and technical effects thereof are similar. Details are not described herein again.

FIG. 14 is a schematic diagram of a hardware structure of another terminal device according to an embodiment of this application. As shown in FIG. 14, the terminal device may be the first device or the second device described in the embodiments of this application.

The terminal device may include a processor 1401, a communication line 1404, and at least one communication interface (for example, a communication interface 1403 is used as an example for description in FIG. 14).

The processor 1401 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1404 may include a circuit configured to transmit information between the foregoing components.

The communication interface 1403 uses any apparatus of a transceiver type to communicate with another device or a communication network such as an Ethernet, wireless local area networks (wireless local area networks, WLAN), and the like.

Possibly, the terminal device may further include a memory 1402.

The memory 1402 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and connect to the processor by using the communication line 1404. The memory may alternatively be integrated with the processor.

The memory 1402 is configured to store computer-executable instructions for performing the solutions of this application, and is controlled and executed by the processor 1401. The processor 1401 is configured to execute the computer executable instructions stored in the memory 1402 to implement the method provided in the embodiments of this application.

Possibly, the computer executable instructions in this embodiment of this application may also be referred to as application code. This is not specifically limited in this embodiment of this application.

In a specific implementation, in an embodiment, the processor 1401 may include one or more CPUs, for example, a CPU 0 and a CPU 1 in FIG. 14.

In a specific implementation, in an embodiment, the terminal device may include a plurality of processors, for example, the processor 1401 and a processor 1405 in FIG. 14. Each of these processors may be a single-core (single-CPU) processor, or may be a multi-core (multi-CPU) processor. The processor herein may be one or more devices or circuits, and/or a processing core configured to process data (for example, computer program instructions).

In the foregoing embodiments, the instructions executed by the processor and stored in the memory may be implemented in the form of a computer program product. The computer program product may be pre-written in the memory, or may be downloaded and installed in the memory in the form of software.

The computer program product includes one or more computer instructions. When the computer program instructions are loaded and executed on a computer, all or some of procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, such as a server or a data center, integrating one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

An embodiment of this application further provides a computer-readable storage medium. The method described in the foregoing embodiments may be wholly or partially implemented by software, hardware, firmware, or any combination thereof. The computer-readable medium may include a computer storage medium and a communication medium, and may further include any medium that can transfer a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared, radio, and microwave are included in the definition of the medium. A magnetic disk and an optical disc used herein include a compact disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

The foregoing combination should also be included in the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cross-device content transfer method, applied to a first device, the method comprising:
displaying, by the first device, a first interface, the first interface comprising content displayed by the first device;
establishing, by the first device, a remote communication connection with the second device;
displaying, by the first device, a second interface after establishing the remote communication connection, the second interface comprising content displayed by the second device and a first toolbar, the content displayed by the second device comprising a first icon; and
displaying, by the first device in response to an operation of dragging the first icon to the first toolbar, a third interface, and receiving a first element indicated by the first icon and transmitted by the second device, the third interface comprising the content displayed by the second device;
a first folder of the first device comprising the first element after the first element is transferred.

2. The method according to claim 1, wherein the displaying, by the first device in response to an operation of dragging the first icon to the first toolbar, a third interface comprises:
displaying, by the first device in response to the operation of dragging the first icon to the first toolbar, a fourth interface, the fourth interface comprising: the content displayed by the second device and a second toolbar, the second toolbar being configured to indicate a position where the first element is transferred across devices; and
displaying, by the first device in response to an operation of dragging the first icon to the second toolbar, the third interface.

3. The method according to claim 1, wherein before the in response to a first operation of dragging the first icon to the first toolbar, the method further comprises:
displaying, by the first device in response to an operation on the first toolbar, a floating ball corresponding to the first toolbar; and
the displaying, by the first device in response to an operation of dragging the first icon to the first toolbar, a third interface comprises: displaying, by the first device in response to an operation of dragging the first icon to a first region, the third interface, the first region comprising the floating ball.

4. The method according to claim 3, wherein the displaying, by the first device in response to an operation of dragging the first icon to a first region, the third interface comprises:
displaying, by the first device in response to the operation of dragging the first icon to the first region, a fourth interface, the fourth interface comprising: the content displayed by the second device and a second toolbar, the second toolbar being configured to indicate a position where the first element is transferred across devices; and
displaying, by the first device in response to an operation of dragging the first icon to the second toolbar, the third interface.

5. The method according to any one of claims 1 to 4, wherein the third interface further comprises the first toolbar, the first toolbar further comprises a first button, a first identifier indicating a number of files transferred is displayed around the first button, and the method further comprises:
further displaying, by the first device in response to an operation on the first button, a first window in the third interface, the first window indicating that the second device is transferring the first element to the first device.

6. The method according to claim 5, wherein the first window further comprises: a second button configured to open the first folder, and the method further comprises:
displaying, by the first device in response to an operation on the second button, a fifth interface, the fifth interface being an interface corresponding to the first folder, the first folder comprising files received by the first device from the second device based on the remote communication connection.

7. The method according to claim 2 or 4, wherein the displaying, by the first device in response to an operation of dragging the first icon to the second toolbar, the third interface comprises:
displaying, by the first device in response to the operation of dragging the first icon to the second toolbar, the third interface when the first device determines that a type of the first element meets a preset type, the preset type comprising one or more of the following: a picture, a document, and a folder.

8. A cross-device content transfer method, applied to a first device, the method comprising:
displaying, by the first device, a first interface, the first interface comprising content displayed by the first device;
establishing, by the first device, a remote communication connection with the second device;
displaying, by the first device, a second interface after establishing the remote communication connection, the second interface comprising content displayed by the second device, the content displayed by the second device comprising a second icon;
displaying, by the first device in response to a split-screen operation input by a user, a sixth interface, the sixth interface comprising: a first window and a second window, the first window comprising content displayed by the first device, the second window comprising content displayed by the second device, the first window having no overlap with the second window; and
receiving, by the first device in response to an operation of dragging the second icon from the second window to the first window, a second element indicated by the second icon and transmitted by the second device, and displaying a first prompt box in the first window, the first prompt box being configured to indicate that the second element is being transferred;
the first device comprising the second element after the second element is transferred.

9. The method according to claim 8, wherein after the receiving, by the first device, a second element indicated by the second icon and transmitted by the second device, the method further comprises:
displaying, by the first device, the second icon in the first window.

10. The method according to claim 8, wherein the content displayed by the first device comprises: a thumbnail corresponding to a first album, the second element comprises a first image, and the receiving, by the first device in response to an operation of dragging the second icon from the second window to the first window, a second element indicated by the second icon and transmitted by the second device, and displaying a first prompt box in the first window comprises:
receiving, by the first device in response to an operation of dragging the second icon from the second window to the thumbnail corresponding to the first album, the first image transmitted by the second device, and displaying the first prompt box in the first window, the first album comprising the first image after the first image is transferred.

11. The method according to claim 8, wherein the content displayed by the first device comprises: a thumbnail corresponding to at least one image, any one of the at least one image belonging to a second album, the second element comprises a second image, and the receiving, by the first device in response to an operation of dragging the second icon from the second window to the first window, a second element indicated by the second icon and transmitted by the second device, and displaying a first prompt box in the first window comprises:
receiving, by the first device in response to the operation of dragging the second icon from the second window to the first window, the second image transmitted by the second device, and displaying the first prompt box in the first window, the second album comprising the second image after the second image is transferred.

12. The method according to claim 8, wherein the content displayed by the first device comprises: a thumbnail corresponding to a third image and a thumbnail corresponding to a fourth image, the third image and the fourth image belonging to different albums, the second element comprises a fifth image, and the receiving, by the first device in response to an operation of dragging the second icon from the second window to the first window, a second element indicated by the second icon and transmitted by the second device, and displaying a first prompt box in the first window comprises:
receiving, by the first device in response to the operation of dragging the second icon from the second window to the first window, the fifth image transmitted by the second device, and displaying the first prompt box in the first window, a camera album of the first device comprising the fifth image after the fifth image is transferred.

13. The method according to claim 8 or 9, wherein the interface displayed by the first device further comprises a third icon, and the method further comprises:
transmitting, by the first device in response to an operation of dragging the third icon from the first window to the second window, a third element indicated by the third icon to the second device, and displaying a third prompt box in the second window, the third prompt box being configured to indicate that the third element is being transferred, and the second device comprises the third element.

14. The method according to any one of claims 8 to 13, wherein the first device comprises a display screen, and a display area of the display screen is: a sum of an area occupied by the first window, an area occupied by the second window, and an area occupied by a first region, wherein the first region comprises a button configured to adjust window sizes of the first window and the second window, and the first region is located between the first window and the second window.

15. A cross-device content transfer method, applied to a first device, the method comprising:
displaying, by the first device, a first interface, the first interface comprising content displayed by the first device;
establishing, by the first device, a remote communication connection with the second device;
displaying, by the first device, a second interface after establishing the remote communication connection, the second interface comprising content displayed by the second device, the content displayed by the second device comprising a second icon;
displaying, by the first device in response to a user's operation of opening a first application in the first device, a seventh interface, the seventh interface comprising: a first window and a second window, the first window comprising an interface of the first application, the second window comprising content displayed by the second device, the first window overlaying the second window; and
receiving, by the first device in response to an operation of dragging the second icon from the second window to the first window, a second element indicated by the second icon and transmitted by the second device, and displaying a first prompt box in the first window, the first prompt box being configured to indicate that the second element is being transferred, and the first device comprising the second element after the second element is transferred.

16. The method according to claim 15, wherein after the receiving, by the first device, a second element indicated by the second icon and transmitted by the second device, the method further comprises:
displaying, by the first device, the second icon in the first window.

17. The method according to claim 15 or 16, wherein the interface displayed by the first device further comprises a third icon, and the method further comprises:
transmitting, by the first device in response to an operation of dragging the third icon from the first window to the second window, a third element indicated by the third icon to the second device, and displaying a third prompt box in the second window, the third prompt box being configured to indicate that the third element is being transferred, and the second device comprising the third element after the third element is transferred.

18. The method according to any one of claims 1 to 7, or the method according to any one of claims 8 to 14, or the method according to any one of claims 15 to 17, wherein the displaying, by the first device, a second interface comprises:
displaying, by the first device in response to a user's operation of sliding upward from a bottom edge of the first device, a multitasking interface, the multitasking interface comprising: a thumbnail corresponding to a remote control process; and
displaying, by the first device in response to an operation on the thumbnail corresponding to the remote access control process, the second interface.

19. A terminal device, comprising a memory, a processor, and a computer program stored in the memory and executable on the processor, wherein the computer program, when executed by the processor, causes the terminal device to perform the method according to any one of claims 1 to 7, or perform the method according to any one of claims 8 to 14, or perform the method according to any one of claims 15 to 18.

20. A cross-device content transfer system, wherein the cross-device content transfer system comprises a first device and a second device, the first device being configured to perform the method performed by the first device according to any one of claims 1 to 7, or 8 to 14, or claims 15 to 18, and the second device being configured to perform the method performed by the second device according to any one of claims 1 to 7, or 8 to 14, or claims 15 to 18.

21. A computer-readable storage medium, the computer-readable storage medium storing a computer program, wherein the computer program, when executed by a processor, causes a computer to perform the method according to any one of claims 1 to 7, or perform the method according to any one of claims 8 to 14, or perform the method according to any one of claims 15 to 18.
